# EUROPEAN PATENT SPECIFICATION

(11) **EP 1 392 425 B1**
(45) Date of publication and mention of the grant of the patent: **12.12.2007**
(21) Application number: 02717780.7
(22) Date of filing: 04.04.2002
(51) Int. Cl.: B01J 19/00

(54) **A COMBINATORIAL CHEMISTRY REACTOR SYSTEM**
KOMBINATORISCHES CHEMISCHES REAKTIONSSYSTEM
SYSTEME DE REACTEUR CHIMIQUE COMBINATOIRE

(30) Priority: 05.04.2001 US 826606
(43) Date of publication of application: 03.03.2004
(73) Proprietor: Symyx Technologies, Inc., Santa Clara, CA 95051 (US)
(72) Inventor: WHEELER, Tony, H. Symyx Technologies, Inc., Santa Clara, CA 95051 (US); VAN ERDEN, Lynn Symyx Technologies, Inc., Santa Clara, CA 95051 (US); CHANDLER, William, H., Jr. Symyx Technologies,Inc., Santa Clara, CA 95051 (US); TIEDE, Richard c/o Symyx Technologies, Inc., Santa Clara, CA 95051 (US); SAXTON, Robert, J. c/o Symyx Technologies, Inc., Santa Clara, CA 95051 (US); GURAM, Anil c/o Symyx Technologies, Inc., Santa Clara, CA 95051 (US)
(74) Representative: Pfau, Anton Konrad
(86) International application number: PCT/US2002/010935
(87) International publication number: WO 2002/081076

(56) References cited:
- WO-A-00/09255
- WO-A-00/25925
- WO-A-00/29844
- WO-A-01/02089
- WO-A-01/08800
- WO-A-01/21302
- WO-A-97/45443
- WO-A-98/20965
- DE-A- 3 228 794
- DE-A- 4 316 163
- DE-U- 29 519 602
- DE-U- 29 806 957
- GB-A- 609 517
- US-A- 5 863 507
- US-A- 6 051 439
- US-A- 6 074 610
- US-A- 6 126 904
- US-B1- 6 191 398
- PATENT ABSTRACTS OF JAPAN vol. 1999, no. 11, 30 September 1999 (1999-09-30) -& JP 11 165063 A (SHIMADZU CORP), 22 June 1999 (1999-06-22)
- KARA ANDREWS & GREGOR HSIAO: "PARALLEL CATALYST SCREENING INSTRUMENTATION" CHIMICA OGGI, TEKNOSCIENZE, vol. 19, March 2001 (2001-03), pages 53-55, XP008002154 MILANO, IT ISSN: 0392-839X

## Description

### Background of the Invention

The present invention relates generally to parallel reactors and, in particular, to parallel research reactors suitable for use in a combinatorial (i.e., high-throughput) process for rapidly making, screening and characterizing an array of reaction materials in which process conditions are monitored and controlled.

This invention is especially directed to methods and apparatus for conducting combinatorial chemistry in materials science research programs, and is in the same field as the inventions disclosed in U.S. Patent No. 6,306,658 and International Application No. PCT/US 99/18358, filed August 12, 1999 by Turner et al., entitled Parallel Reactor with Internal Sensing and Method of Using Same, published February 24, 2000 (International Publication No. WO 00/09255). While the apparatus and methods described in these references have proven to be successful, the technology would be further enhanced by providing additional features, including more precise temperature monitoring and control during reactions.

### Summary of the Invention

Among the several objectives of this invention is the provision of a system which is useful in the parallel processing of reaction mixtures, particularly liquids, slurries and gels; the provision of such a system which, at least in certain embodiments, provides ready access to the reaction vessels to facilitate loading of reaction materials and cleaning; the provision of such a system which, at least in certain embodiments, permits more precise sensing and control of reaction temperature in each reaction vessel; the provision of such a system which, at least in certain embodiments, is constructed to reduce leakage of pressurized fluids from the reaction vessels; the provision of such a system where, at least in certain embodiments, the reaction vessels are thermally isolated from one another; the provision of such a system which, at least in certain embodiments, has an improved stirrer drive mechanism; and the provision of such a system which has a pressure relief feature for reducing the risk of injury.

The reactor system of the invention is set forth in claims 1-24.

Other objectives and features of the present invention will be in part apparent and in part pointed out hereinafter.

### Brief Description of the Drawings

Fig. 1 is a front perspective of a combinatorial chemistry reactor system of the present invention;
Fig. 2 is a front perspective showing the system of Fig. 1 with a carriage lowered away from a head;
Fig. 3 is a partial section of the system of Fig. 2 taken in the plane including line 3--3 of Fig. 4, with a reactor block removed from a temperature control unit and portions of the unit removed to show internal construction;
Fig. 4 is a front elevation of the system of Fig. 1;
Fig. 5 is a left side (end) elevation of the system of Fig. 1;
Fig. 6 is a top plan view of the system of Fig. 1;
Fig. 7 is a partial rear perspective of the system of Fig. 1 with portions of a supporting structure removed to show detail;

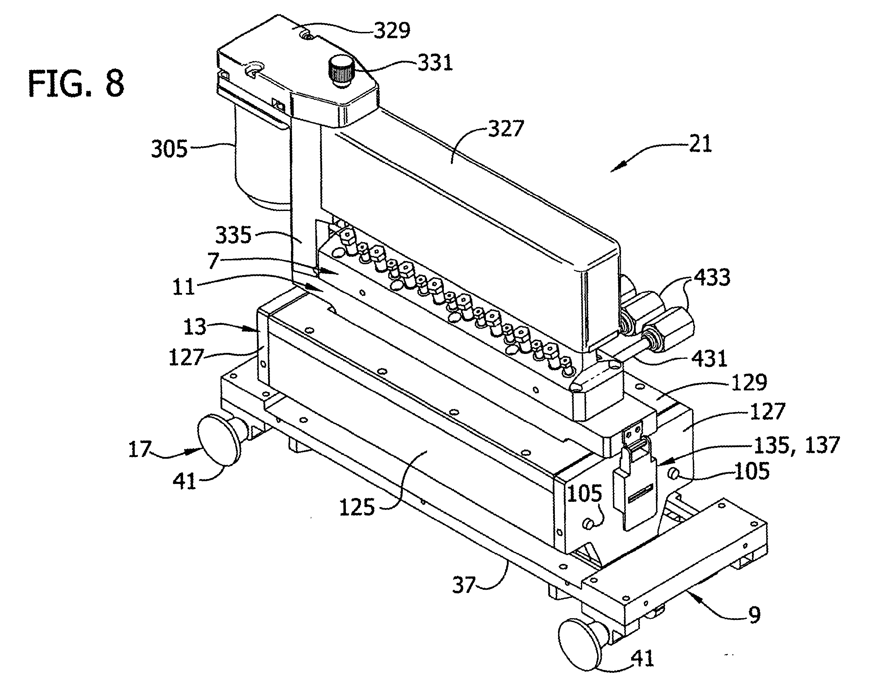

Fig. 8 is a partial front perspective of the system of Fig. 1;
Fig. 9 is a section of a heat transfer plate of the system of Fig. 1 taken in the plane including line 9--9 of Fig. 4;
Fig. 10 is an elevation of a layer of insulation;
Fig. 11 is a partial section of the system of Fig. 1 taken in the plane including line 11--11 of Fig. 5;
Fig. 12 is a partial section of the system of Fig. 1 taken in the plane including line 12--12 of Fig. 6;
Fig. 13 is a partial section of the system of Fig. 1, with cooling elements shown, taken in the plane including line 13--13 of Fig. 4;
Fig. 14 is a partial section of the system of Fig. 1, with cooling elements shown, taken in the plane including line 14--14 of Fig. 4;
Fig. 15 is a front perspective of the reactor block of Fig. 3;
Fig. 16 is a front elevation of the reactor block of Fig. 15;
Fig. 17 is a right elevation of the reactor block of Fig. 15;
Fig. 18 is a rear perspective of a head of Fig. 2;
Fig. 19 is a front perspective of the head of Fig. 18;

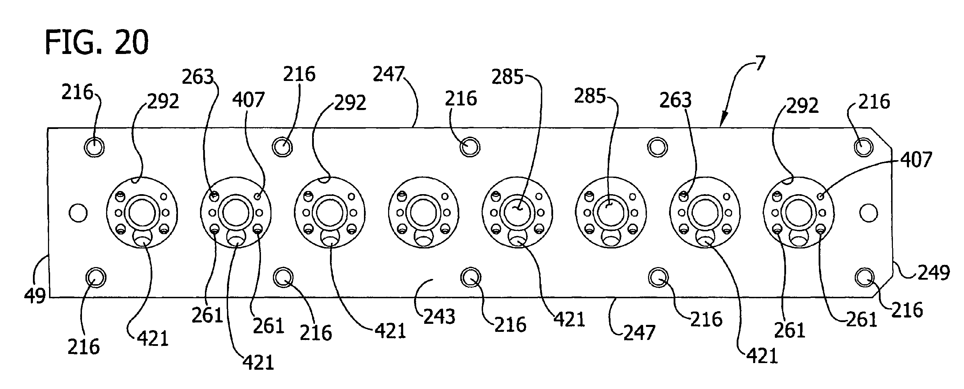

Fig. 20 is a bottom plan view of the head of Fig. 18;
Fig. 21 is a front elevation of the reactor block of Fig. 15 and head of Fig. 18 with portions removed to show internal construction;
Fig. 22 is an enlarged partial section of the system of Fig. 12;
Fig. 23 is an enlarged partial section of the system of Fig. 12;
Fig. 24 is an enlarged partial section of the system of Fig. 12;
Fig. 25 is a perspective of a drive shaft and stirrer of the system of Fig. 1;
Fig. 26 is a partial section of the system of Fig. 1 taken in the plane including line 26--26 of Fig. 6;
Fig. 27 is a partial section of the system of Fig. 26;
Fig. 27A is a partial section of another system of the present invention;
Fig. 28 is a partial section of the system of Fig. 1 taken in the plane including line 28--28 of Fig. 6;
Fig. 29 is a front perspective of another reactor system of the present invention;
Fig. 30 is a bottom perspective of a reactor block of the system of Fig. 29;
Fig. 31 is an enlarged partial perspective of Fig. 30;
Fig. 32 is a top perspective of the reactor block of Fig. 30; and
Fig. 33 is an enlarged partial perspective of Fig. 32.

Corresponding parts are designated by corresponding reference numbers throughout the drawings.

### Description of Preferred Embodiment

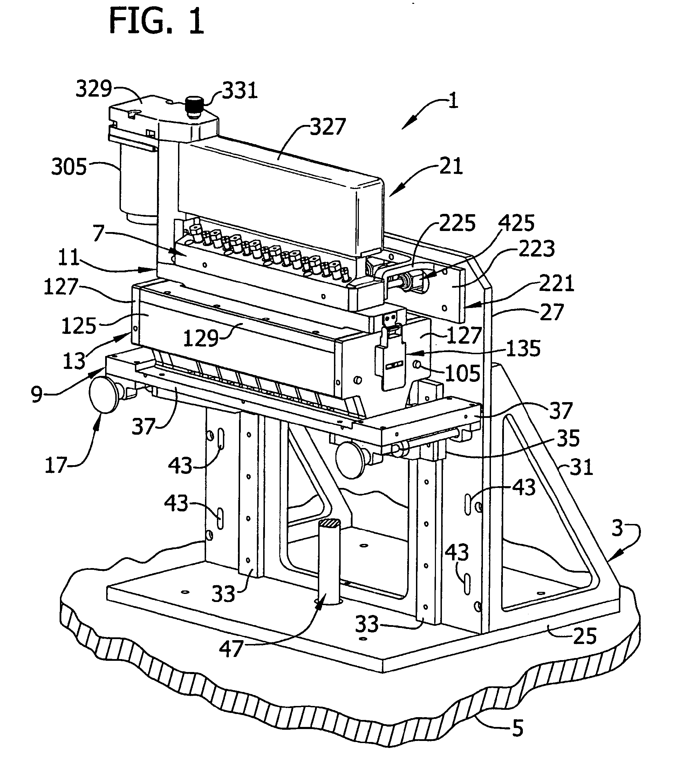

Referring now to the drawings, and more particularly to Figs. 1-3, a combinatorial chemistry system of the present invention for the parallel processing of reaction mixtures is designated in its entirety by the reference numeral 1. As shown, the system 1 comprises a frame, generally designated 3, resting on a supporting structure 5, such as a table, a head, generally designated 7, mounted in fixed position on the frame, and a carriage, generally indicated at 9, mounted on the frame below the head for vertical movement relative to the frame and the head. The carriage 9 supports a reactor block, generally designated 11, cradled by a temperature control unit, generally designated 13, for controlling the temperature of the reactor block. The reactor block 11 contains a series of reaction wells 15. As will be described hereinafter, the carriage 9 is movable toward the head 7 so that the reactor block 11 and head can be assembled for a reaction process, and down away from the head to separate the reactor block from the head. A locking mechanism, generally indicated at 17, is provided for locking the carriage 9 in selected vertical positions relative to the frame 3. In general, the system 1 also includes a stirring assembly, generally designated 21 in Figs. 1-3, on the head 7 for stirring reaction materials in the reactor block 11, as will be described.

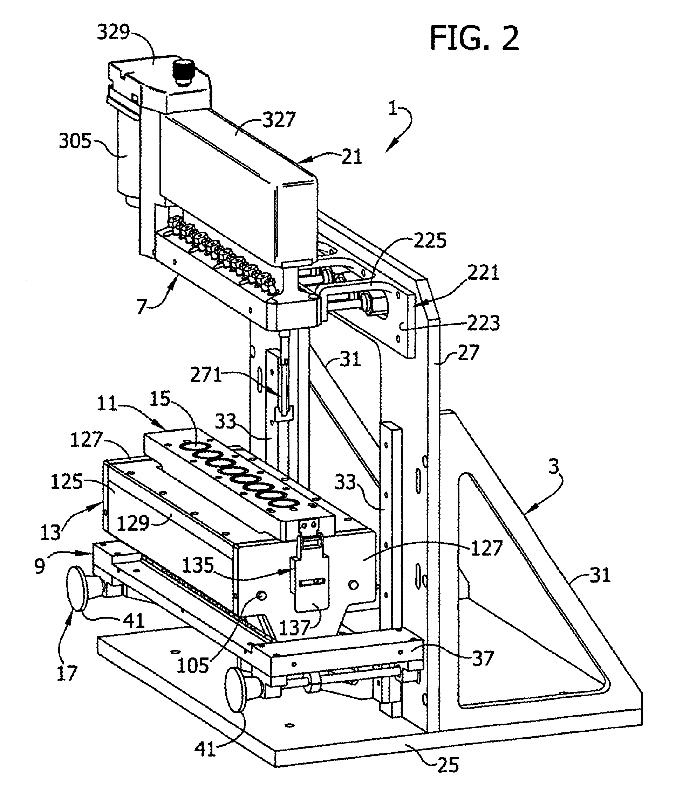

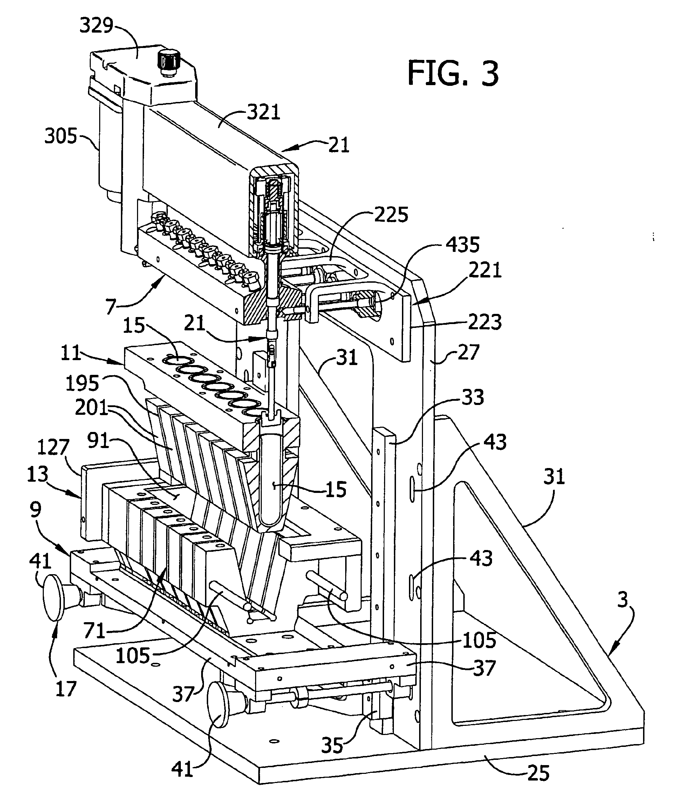

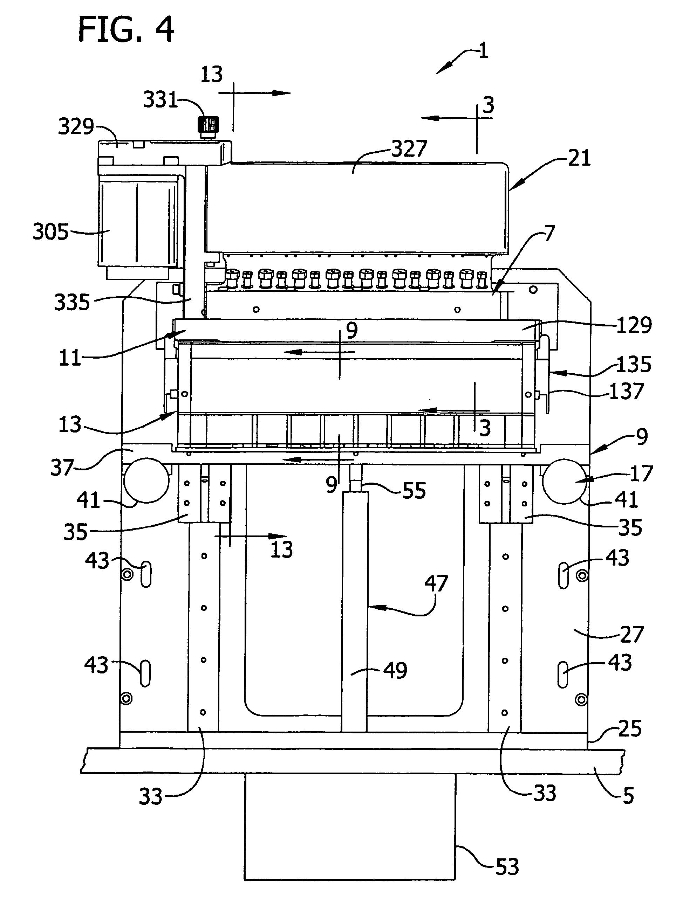

More specifically, the frame 3 comprises, in one embodiment, a base 25 supported by the supporting structure 5, a panel 27 extending up from the base, and a pair of braces 31 supporting the panel in an upright (e.g., generally vertical) position on the base (see Figs. 1-3). A pair of parallel, spaced-apart vertical rails 33 are fastened to the panel 27 and constitute tracks for the carriage 9 so that the carriage may be moved toward and away from the head 7. The carriage 9 itself comprises a pair of brackets 35 having a sliding fit with respective rails 33, and a horizontal platform 37 which spans the two brackets 35 and is secured thereto by suitable means, the brackets and platform being slidable up and down on the rails to selected positions (compare Figs. 1 and 2). The locking mechanism 17 for locking the carriage 9 in selected position comprises a pair of pull-rods 41 mounted on the underside of the platform 37 adjacent opposite ends therefor for sliding movement between an extended locking position in which the pull-rods are received in selected openings 43 (see Figs. 3 and 4) of two vertical rows of detent openings in the frame panel 27, and a retracted position in which the pull-rods are removed from respective openings to permit vertical movement of the carriage. The pull-rods 41 are biased toward the stated extended locking position by springs (not shown). For reasons which will appear, the detent openings 43 are preferably elongate in the vertical direction (e.g., slots) to permit limited vertical movement of the carriage 9 when the locking mechanism 17 is engaged. Other types of locking mechanisms, detent or otherwise, may be used to lock the carriage 9 in selected position.

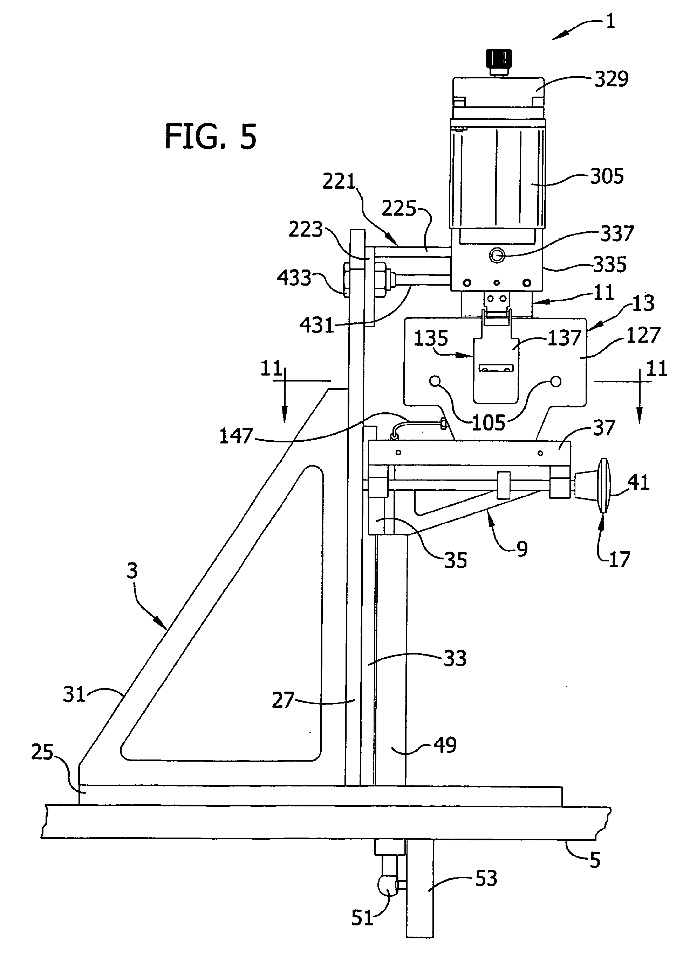

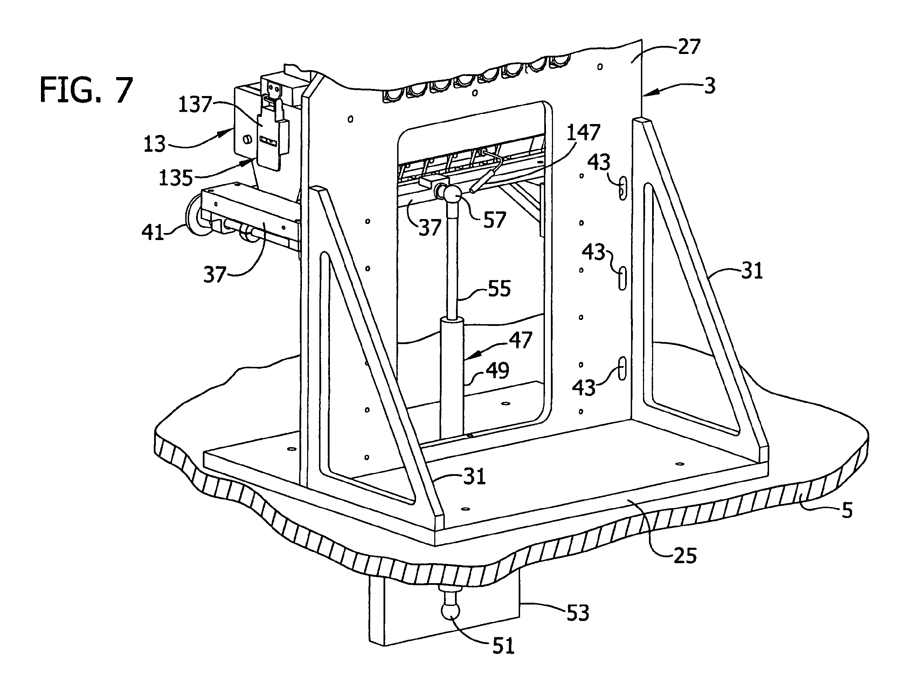

As shown in Figs. 1, 4 and 7, movement of the carriage 9 between raised and lowered positions is effected manually with the assistance of a power assist device comprising a conventional pressurized gas spring unit, generally designated 47, which includes a cylinder 49 having a connection 51 at its lower end with a bracket 53 on the supporting structure 5 (see Figs. 5 and 7) and a rod 55 connected at its upper end at 57 to the carriage platform 37 (see Fig. 7). The cylinder 49 is pressurized with a suitable gas and provides an upward force which counterbalances a substantial portion of the weight of the carriage 9, temperature control unit 13 and reaction block 11, and thus assists in the lifting and lowering of the carriage. Other types of devices may be used to assist in the manual lowering and raising of the carriage. Alternatively, movement of the carriage can be effected solely by mechanical means, such as by power actuators operated by manual or automatic controls.

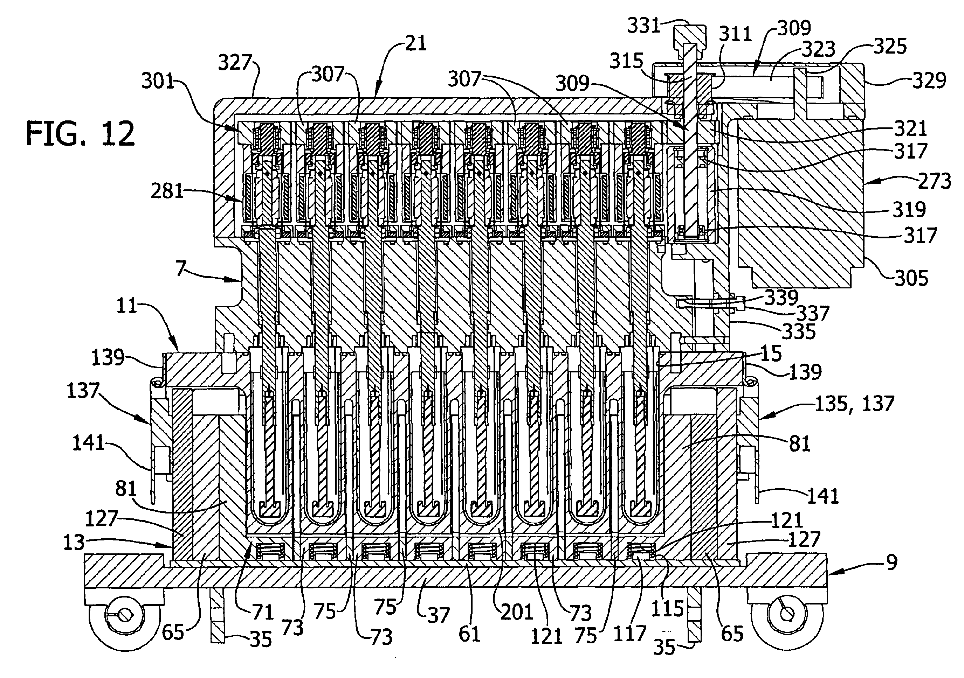

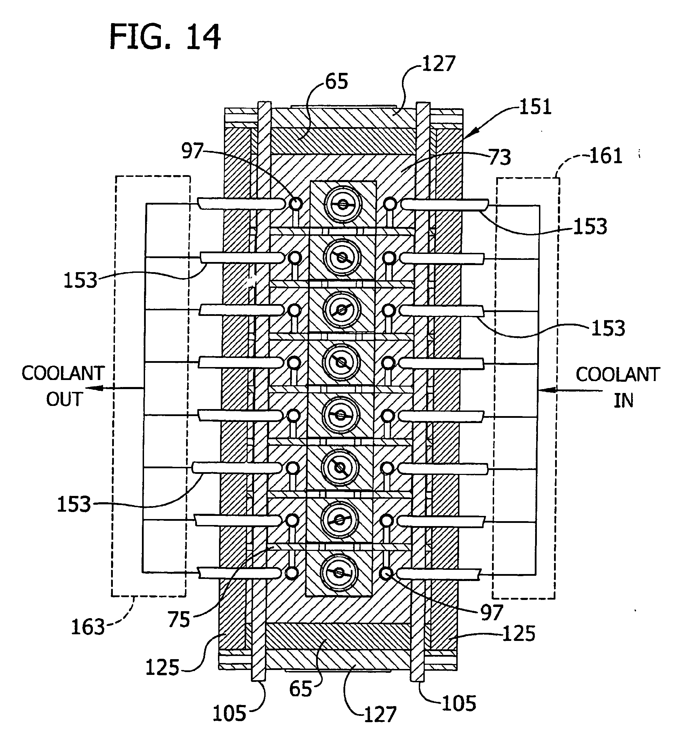

In one embodiment, the temperature control unit 13 comprises a base 61 (see Fig. 12) of thermal insulating material (e.g., glass-mica) attached to the top surface of the carriage platform 37, a pair of parallel end plates 65 affixed to the base and extending up from the base at opposite ends of the base, and a heat transfer assembly, generally designated 71, above the base between the end plates comprising a plurality of parallel heat transfer plates 73 of thermally conductive material (e.g., aluminum). These plates 73 are thermally separated, or isolated, by layers 75 of thermal insulation (see Figs. 12 and 14) (e.g., high-temperature millboard having a thermal conductivity of about 0.78 Btu-in/hr./ft²/°F @ 800° F.). The number of heat transfer plates 73 preferably corresponds to the number of reaction wells 15 in the reactor block 11. In the specific embodiment shown in the drawings, the reactor block 11 has eight wells 15, and there are a corresponding number of heat transfer plates 73, but this number may vary. The two end heat transfer plates 73 are wider than the other six heat transfer plates to provide relatively thick closure walls 81 toward opposite ends of the unit 13. These walls are positioned face-to-face with the two end plates 65.

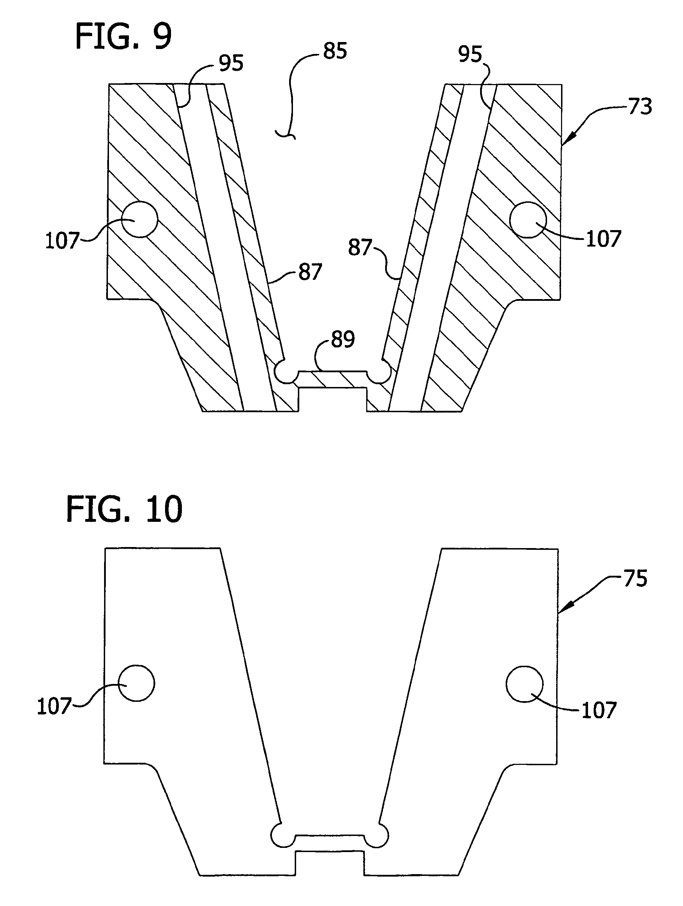

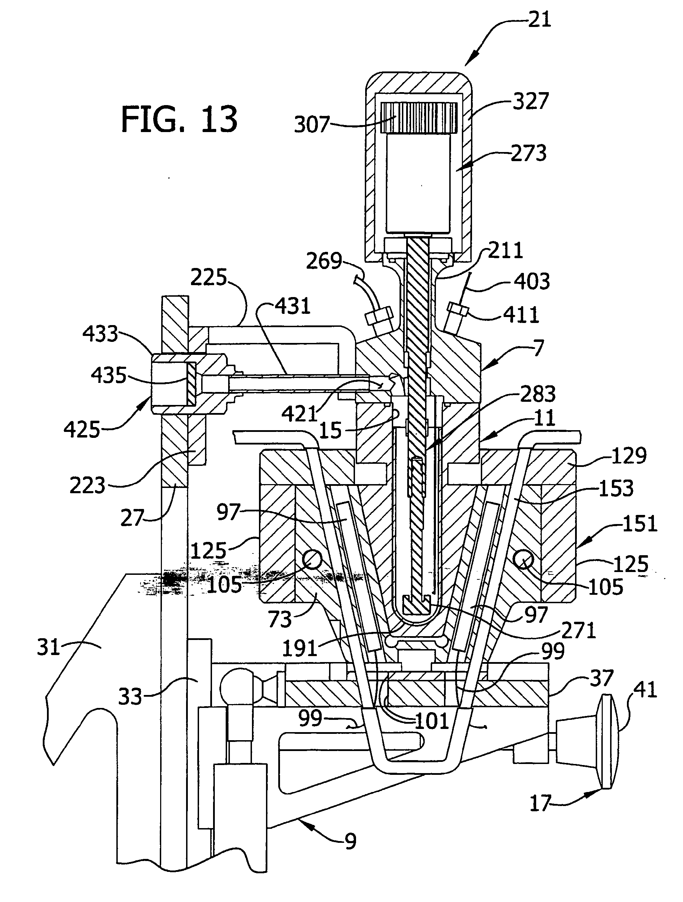

Each heat transfer plate 73 has a central recess 85 therein extending down from its upper edge. In one embodiment, this recess 85 is generally channel shaped (see Fig. 9) and has opposing interior side surfaces indicated at 87 and a bottom surface indicated at 89. The layers 75 of thermal insulation have a generally corresponding shape (see Fig. 10). As a result, the heat transfer plates 73 and layers 75 of insulation define a cavity 91 (see Fig. 3) for receiving and cradling the reactor block 11. In an embodiment where the temperature control unit 13 operates as a heater to heat the reactor block 11, each heat transfer plate 73 has a pair of bores 95 therein (see Fig. 9) located relatively close to respective interior side surfaces of the plate for receiving heating elements 97 (e.g., electric cartridge heaters; see Figs. 13, 26 and 27) for heating the plate and the reactor block. The heating elements 97 are connected to suitable controls by wiring 99 passing down through holes 101 in the base 61 and the carriage platform 37. The sides of the reactor block 11 and the interior side surfaces 87 of the heat transfer plates 73 are preferably tapered to provide a close fit between the plates and the block for the efficient conductive transfer of heat therebetween. The heating elements 97 are selected to heat the reactor block 11 to the desired temperature, such as temperatures in a range from about ambient to about 400° C., more preferably in a range from about ambient to about 250° C., and even more preferably in a range from about ambient to about 200° C.

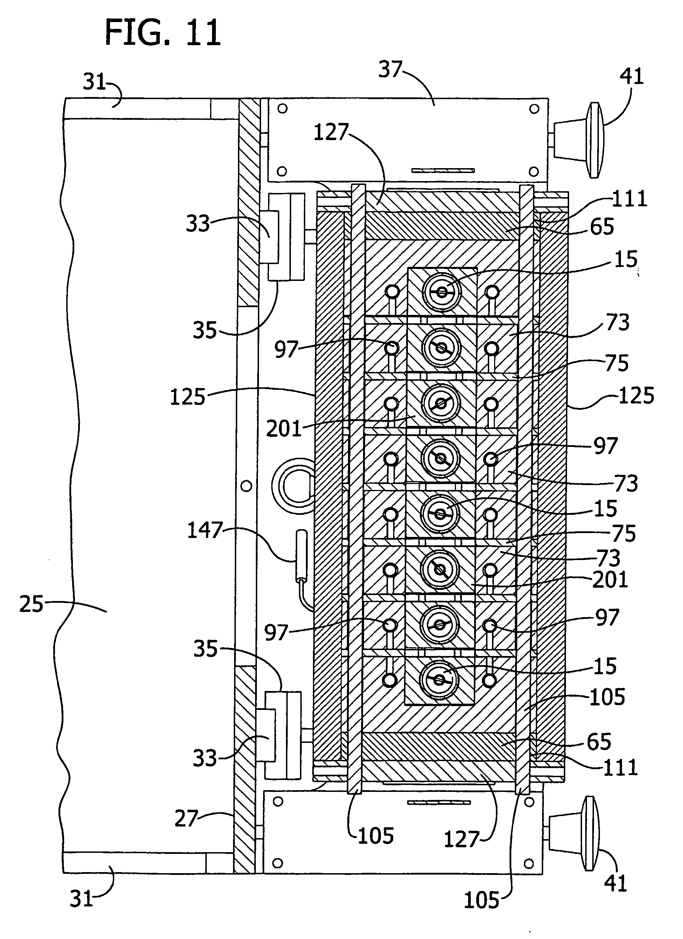

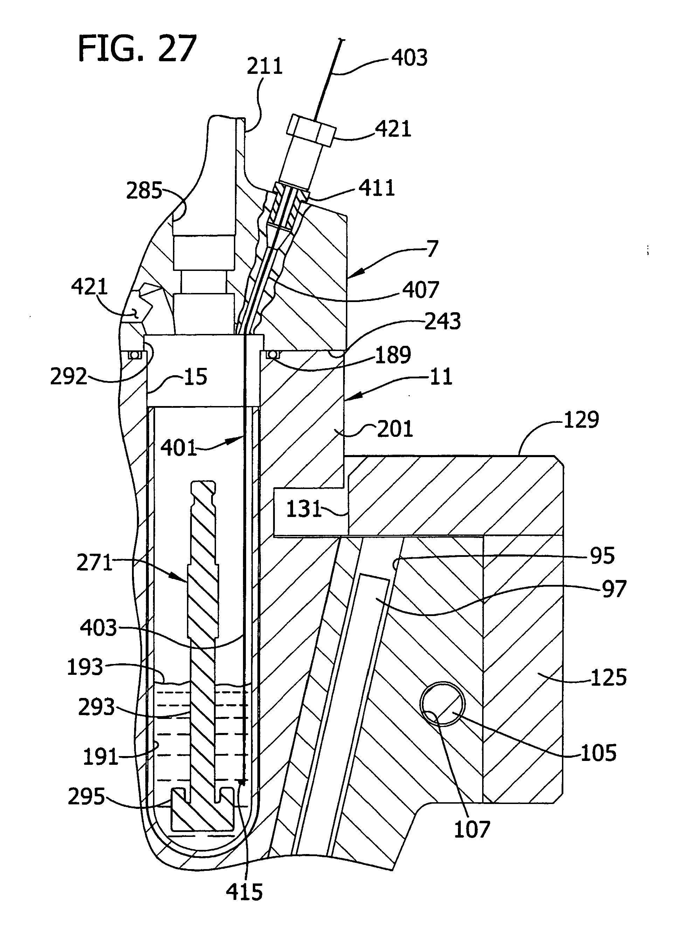

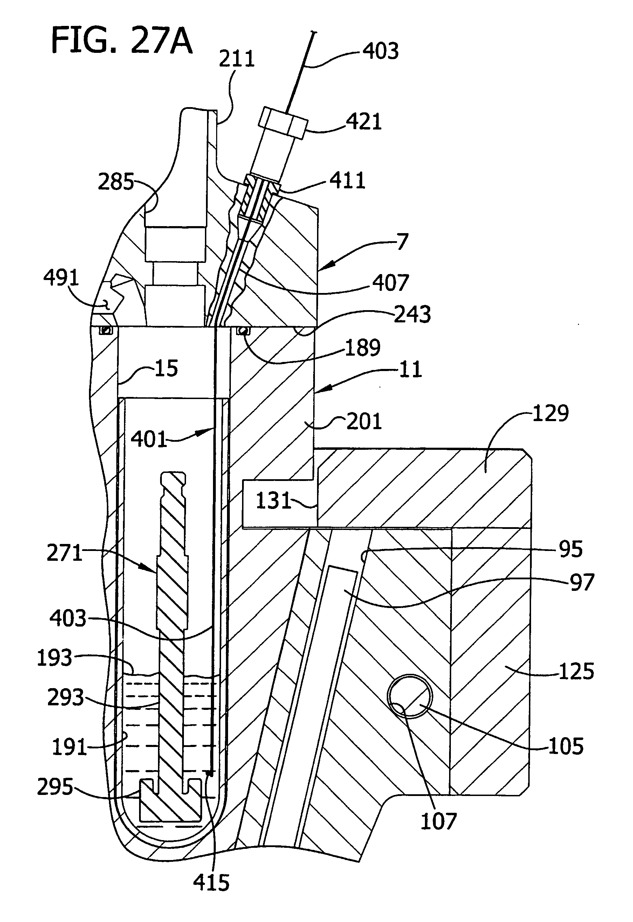

The heat transfer plates 73 and layers 75 of insulation are supported above the base 61 by a pair of horizontal rods 105 which extend between the end plates 65 (see Figs. 11 and 12) through aligned holes 107 (see Figs. 9 and 10) in the plates 73 and layers 75 of insulation. The ends of the rods 105 are received in holes 111 in the end plates 65 and can either be free of securement to the end plates or releasably secured in place by set screws or other suitable means (see Fig. 11). The holes 107 in the heat transfer plates 65 and insulation layers 75 are somewhat oversize to allow limited vertical movement (e.g., preferably in a range from about 0.4 mm (1/64 in.) to about 6.35 mm (1/4 in.)) of the plates and layers relative to the base 61 and to one another. As shown in Fig. 12, springs 115 are provided for urging the plates 73 in a generally upward direction into thermal contact with the reactor block 11 seated in the cavity 91. In one embodiment, each spring 115 comprises a vertically-oriented coil compression spring having its lower end positioned on a boss 117 on the base 61 and having its upper end received in a recess 121 in a respective heat transfer plate 73. Other spring or biasing arrangements are contemplated. The heat transfer plates 73 are enclosed by a cover comprising a pair of side panels 125 at opposite sides (e.g., front and back) of the temperature control unit 13, a pair of end panels 127 at opposite ends of the unit, and a top cover panel 129 bridging the side panels between the end panels. The top cover panel 129 has a central opening 131 therein through which the reactor block 11 can be placed in the temperature control unit 13 and removed therefrom (see Fig. 27). The cover panels 125, 127 and 129 are suitably secured to one another and supported by the temperature control unit 13.

To insure good thermal contact between the reactor block 11 and the heat transfer plates 73, a mechanism generally designated 135, is provided operable to press the reactor block against the heat transfer plates. This system preferably comprises a pair of latches 137 at opposite ends of the reactor block 11 and temperature control unit 13. In the embodiment shown in Fig. 12, each latch 137 comprises a catch 139 (e.g., J-hook) mounted on one end of the reactor block 11 and an over-center latching bar 141 mounted on a corresponding end cover plate 127 of the temperature control unit 13, the latching bar being engageable with the catch and then rotatable to an over-center position in conventional fashion to pull the reactor block down into a fully seated position in the cavity 91 defined by the unit. In this seated position, the springs 115 are preferably deflected to bias the individual heat transfer plates 73 into good thermal contact with the tapered side surfaces of the reactor block 11. Other systems may be used to maintain the reactor block and the heat transfer plates 73 in good thermal contact with one another.

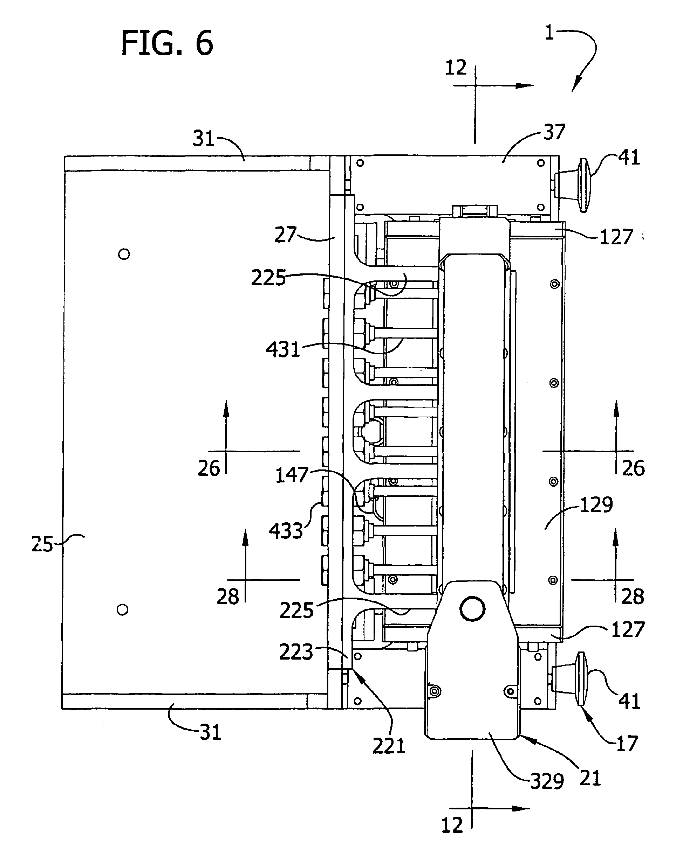

To prevent overheating of the reactor block 11, a temperature sensor 147 (e.g., thermocouple device) is provided for sensing the temperature of each heat transfer plate 73, one such sensor being shown in Figs. 5-7 and 11, for example. In the event the temperature of one or more heat transfer plates 73 exceeds a predetermined temperature, the appropriate sensor(s) 147 will signal for the shut off of power to the plate or plates to prevent overheating of the plate(s) and/or reactor block 11.

Figs. 13 and 14 show a second embodiment of a temperature control unit, generally designated 151, of the present invention. In this embodiment, the unit 151 is constructed for both heating and cooling the reactor block 11, which can be useful in conducting reactions at temperatures below ambient temperature (e.g., down to about -45° C), and also for cooling the reactor block down during or after the heating of reaction mixtures. The unit 151 is essentially the same as the temperature control unit 13 described above (and corresponding parts are given the same reference numbers) except that unit 151 further comprises a plurality of cooling elements 153 for cooling the heat transfer plates 73. By way of example, each heat transfer plate 73 may be provided with a cooling element in the form of a conduit, also designated 153, carrying a suitable cooling fluid (refrigerant) for cooling the plate. The conduit 153 is preferably formed by tubing installed in passages in the plate 73. Alternatively, the conduit can be formed by passaging in the plate 73 without tubing, or by passaging in the plate connected by tubing. In any case, the conduit 153 is preferably located on opposite sides of the central recess 85 (see Fig. 9) in the plate 73 to provide for efficient cooling of the respective well section of the reactor block 11. The conduits 153 associated with the heat transfer plates 73 are connected at their upstream ends to an inlet manifold 161 which receives coolant from a conventional refrigeration system (not shown) and at their downstream ends to an outlet manifold 163 for delivery of the coolant back to the refrigeration system (see Fig. 14). Suitable thermal insulation is provided to insulate the conduits 153 and manifolds 161,163. In the event different wells 15 are to be cooled to different temperatures, the cooling elements 153 can be operated in combination with the heating elements 97 to achieve the appropriate temperature control over each heat transfer plate and corresponding well 15 independently of the other plates and wells.

Other types of temperature control units may also be used, such as those disclosed in pending application Ser. No. 09/417,125, filed 11/19/98 entitled "Multi-Temperature Modular Reactor and Method of Using Same." Such temperature control units allow for the active heating and/or cooling of the reactor block combined with additional active heating and/or cooling of individual wells or groups of wells, thereby providing distinct temperature control of individual wells or groups of wells from one another. A temperature control unit of this type could include, for example, a first heat transfer device operable to bring the reactor block and the various well sections to a first temperature, and a group of second heat transfer devices associated with individual well sections and operable to bring such sections to different temperatures relative to one another. The use of cooling baths and thermoelectric devices is also contemplated. Further, the temperature control unit 151 of the present invention could be formed for cooling the reactor block 11 and not for heating it. One embodiment of such a unit 151 could be similar to the unit 13 shown in Figs. 13 and 14 but with the heating elements 97 omitted.

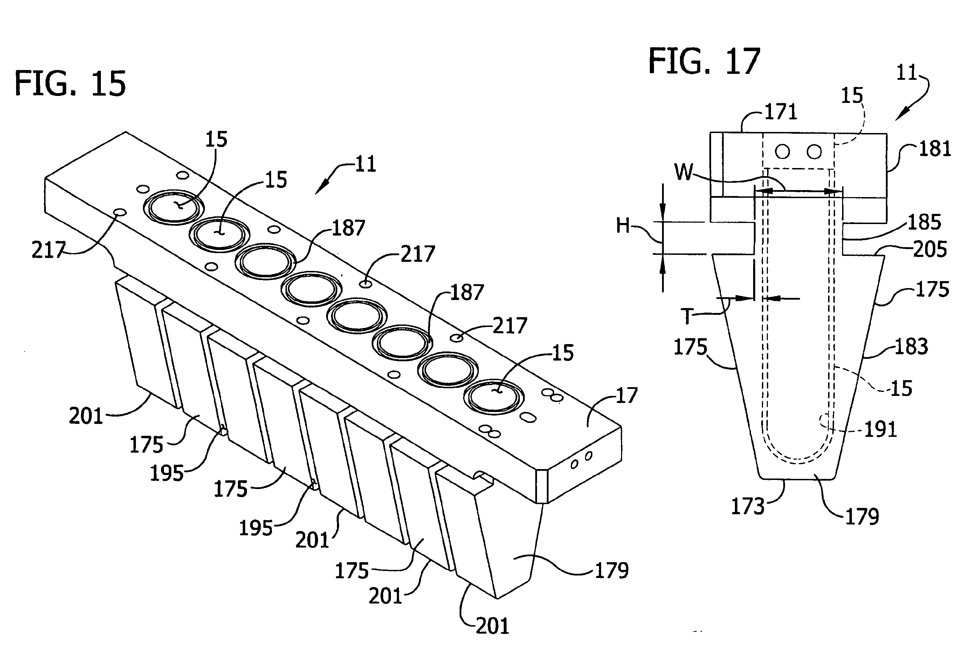

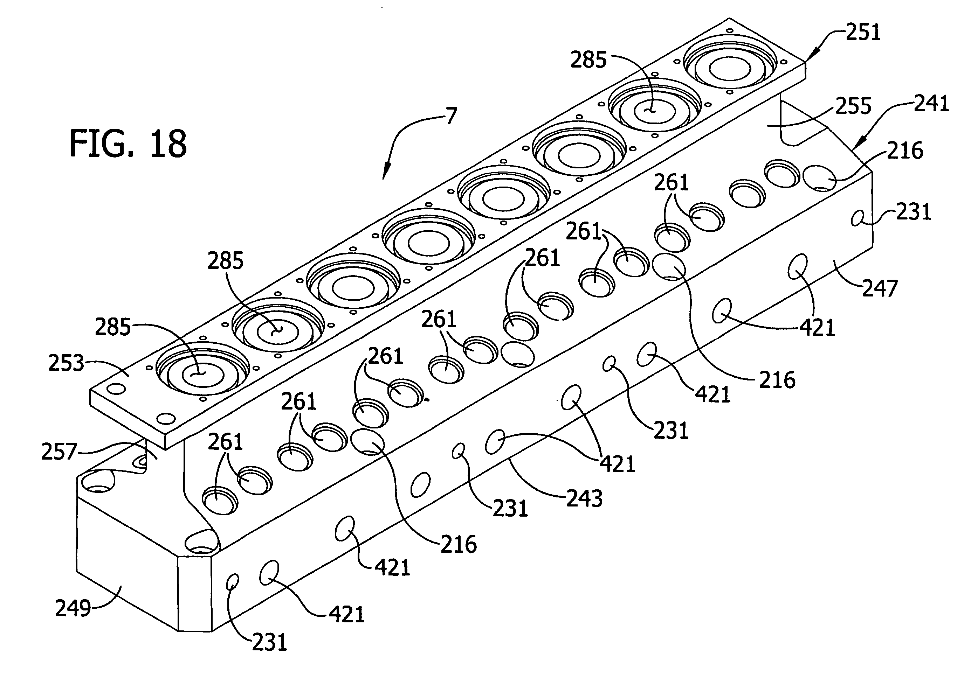

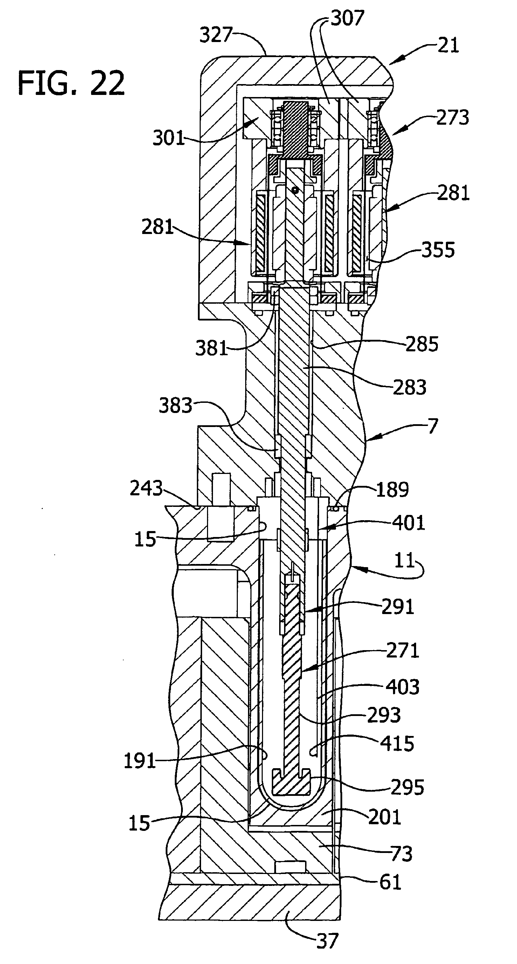

The reactor block 11 preferably comprises a monolithic one-piece body of thermally conductive material (e.g., aluminum, stainless steel, ceramic) having properties capable of withstanding the pressure and reaction conditions to which it is subjected (e.g., pressures up to 3000 psi). As shown in Figs. 15-17, the block 11 has an upper face 171, a lower face 173, opposite side faces 175 which have a taper generally corresponding to the taper of the interior side walls of the cavity 91 in the temperature control unit 13, and opposite end faces 179. As viewed in Fig. 17, the block 11 has an upper section 181, a lower section 183, and a relatively narrow intermediate section or neck 185 connecting the upper and lower sections. A plurality of the aforementioned wells 15 are formed in the reactor block 11 by bores, for example, extending down from the upper face 171 of the block through the upper and intermediate sections 181, 185 and into the lower section 183 to a level generally adjacent the lower face 173 of the reactor block. The wells 15 preferably have rounded bottoms and a generally circular cross sectional shape, although other shapes are contemplated, and each well defines an interior space. A circular groove 187 for receiving an O-ring 189 (see Figs. 22 and 27) is formed in the upper face 171 of the block around each well 15. The O-ring 189 seals against the head 7 when the reactor block 11 and head are in assembly to seal the well against leakage.

A liner 191 (see Fig. 13) comprising, for example, a vial, is preferably (but not necessarily) removably received in each well 15. Together, the vial 191 and well 15 form a reaction vessel for containing reaction mixtures during a chemical process. Alternatively, the reaction vessel may be constituted by the well 15 without a vial or other liner. Thus, as used herein, the term "vessel" means a well 15 either with or without a liner in it. The term "reaction chamber," on the other hand, refers to the space defined the walls of the well 15 and the removable vial 191 (if used) when the reactor block 11 and head 7 are assembled for conducting chemical reactions in the wells. In some embodiments (Figs. 12, 13, 22 and 27), the reaction chamber may include a recess (further described as counterbores 292 below) in the head 7 communicating with the well 15. In other embodiments, the head 7 may have no such recess (see Fig. 27A), in which case the reaction chamber would be defined entirely by the walls of the well 15 and the vial 191, if one is used. In any event, each reaction chamber has a bottom end toward the bottom of the well and a head end toward the head 7. The portion of the reaction chamber above the fill level 193 of the liquid and/or solid material in the reaction chamber is typically referred to as the "head space" of the reaction chamber. The reaction chamber also has a "reaction zone." The reaction zone refers to the region of the reaction chamber in which the chemical reaction of interest occurs predominantly. Hence, the reaction zone identifies a reactant-containing region having an environment presenting reaction conditions effective for the chemical reaction of interest. The reaction zone may also contain one or more catalysts or other materials in addition to reactants. For liquid-phase reactions, for example, the reaction zone is defined by the volume of the reaction chamber containing the liquid phase reactants. For reactions occurring at a phase interface (e.g., gas-liquid interface, gas-solid interface, liquid-liquid interface, liquid-solid interface) the reaction zone is defined by the volume that includes the interface, together with associated boundary layers. For gas-phase reactions, the reaction zone is defined by the volume of the reaction chamber containing the gas phase reactants. Regardless of the phase state of the reaction, for reactions effected under conditions other than ambient conditions (e.g., reactions effected at non-ambient temperature, or non-ambient pressure), the reaction zone can include a region of the reaction chamber having an environment maintained substantially at the desired reaction conditions (with allowed variations in reaction conditions being acceptable, the extent of such variations depending on the particular reaction of interest, and the nature and/or goals of the experiment).

The reaction block 11 may contain any practical number of wells 15 (e.g., 3, 6, 8, 12) arranged in a row extending from adjacent one end the block to adjacent its opposite end. The volume of each reaction vessel may vary according to application. For example, the volume may vary from about 0.1 ml to about 500 ml, more preferably from about 1 ml to about 100 ml, and even more preferably from about 5 ml to about 20 ml. Further, the side wall of the liner 191 may be generally cylindric in shape and have an inside diameter in a range from about 1.27 cm (0.5 in.) to about 6.35 cm (2.5 in.), more preferably in a range from about 1.27 cm (0.5 in.) to about 1.91 cm (0.75 in.), and most preferably about 1.55 cm (0.609 in.), and the liner may have an overall height in a range from about 2.54 cm (1.0 in.) to about 10.2 cm (4.0 in.), more preferably in a range from about 3.81 cm (1.5 in.) to about 7.62 cm (3.0 in.), and most preferably about 5.46 cm (2.15 in.).

In one embodiment particularly intended to reduce leakage, the monolithic reactor block body 11 is machined from a single piece of metal and is essentially devoid of any passaging for transporting fluid to or from the wells 15, and further essentially devoid of any passaging for instrumentation, such passaging being in the head 7 as will be described. Preferably, there is a complete absence of all such passaging, ports and any other cavities (other than the wells 15) in the monolithic reactor block body 11 so that the possibility of leakage is minimized. Placement of such passaging in the head 7 and not in the reactor block 11 also facilitates assembly and disassembly of the system 1.

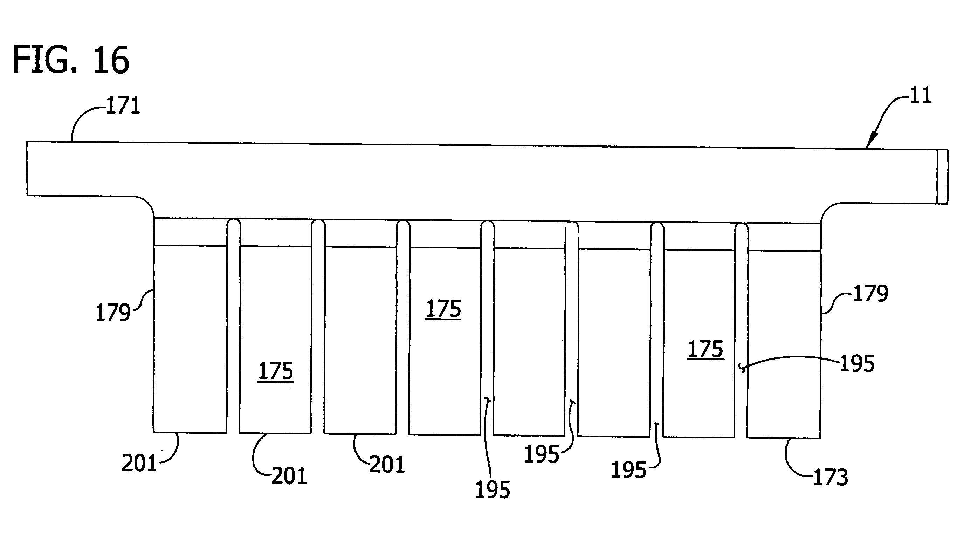

In accordance with one aspect of this invention, the lower section 183 (i.e., temperature controlled section) of the reactor block 11 is formed with gaps 195 (see Fig. 16) between the wells 15 which function to thermally isolate the wells from one another so that the temperature in each well can be more accurately monitored and controlled. In one embodiment, these gaps 195 are formed by slits (e.g, cuts) in the monolithic body of the reactor block 11 extending up from the lower face 173 of the body and extending from one side face 175 of the body to the opposite side face 175 of the body between adjacent wells, the gaps thus dividing the lower section of the reactor body into a plurality of well sections 201, each containing at least one well, and preferably only one well, which is thermally isolated from the well(s) in adjacent well sections. When the reactor block 11 is seated in the temperature control unit 13, each well section 201 is adapted for thermal contact with a respective heat transfer plate 73 of the unit, so that the temperature of each well section can be independently controlled by controlling the temperature of its respective heat transfer plate, independent of the other well sections. Preferably, each well section 201 has a thickness generally corresponding to the thickness of its respective heat transfer plate 73, except for the two end plates which comprise somewhat thicker closure walls 81. The gaps 195 between the well sections 201 allow chemical reactions in different wells 15 to be carried out at substantially greater temperature differentials (e.g., differentials in a range from about 1° C to about 400° C, more preferably in a range from about 5° C to about 200° C, and even more preferably in a range from about 5° C to about 50° C) and within more precise tolerances (e.g., the actual temperature is within about t 20% of the desired temperature, more preferably within about ± 10%, and even more preferably within about ± 2% or less). The size of the gap 195 between adjacent well sections 201 is preferably in a range from about 2.54 mm (0.1 in.) to about 6.35 mm (0.250 in.) and more preferably in a range from about 3.18 mm (0.125 in.) to about 8.96 mm (0.156 in.). Optionally, thermal insulation layers 75 may be placed in the gaps 195.

To reduce the transfer of heat from the lower section 183 (i.e., temperature controlled section) to the upper section 181 of the block 11 and to the head 7, the intermediate section or neck 185 of the block is of reduced width and thus constitutes an area of reduced cross section. In one embodiment, this reduction is effected by a pair of notches 205 extending into opposite sides of the block 11 (see Fig. 17). The dimensions of these notches 205 are such as to provide the desired reduction of heat transfer. For example, the vertical height H of each notch 205 is preferably up to 20% of the overall height (i.e., depth) of the corresponding well 15. By way of example, in one embodiment the height H of each notch 205 is in a range from about 2.54 mm (0.1 in.) to about 13.0 mm (0.5 in.) and more preferably in a range from about 6.35 mm (0.250 in.) to about 7.87 mm (0.31 in.). The horizontal depths of the notches 205 are such as to reduce the overall horizontal width W of the intermediate section (as viewed in Fig. 17) to a dimension which is preferably in a range from about 19.1 mm (0.750 in.) to about 3.18 cm (1.250 in.) and more preferably in a range from 2.22 cm (0.875 in.) to about 2.54 cm (1.0 in.). Taking into account the cross sectional dimension (e.g., diameter) of the well 15 in a given well section 201, the thickness T (see Fig. 17) of the wall connecting the upper and lower sections 181,183 is relatively small, preferably in a range from about 0.762 mm (0.03 in.) to about 2.54 mm (0.10 in.), and more preferably in a range from about 1.27 mm (0.05 in.) to about 1.78 mm (0.07 in.), thus substantially reducing the amount of heat transferred from the lower section 183 to the upper section 181 of the reactor block 11. For a design pressure of 68.9 bar (1000 psig), a thickness T of about 1.52 mm (0.06 in.) is preferred.

In the embodiment described above, the reactor block body 11 is "necked down" (recessed) to form an area of reduced cross section at a location between the ends of each well 15 and toward the upper end of the well. However, it is contemplated that the "neck down" (i.e., area of reduced cross section) may be in other regions ot the reactor block body 11 or even in regions of the head 7 to reduce the transfer of heat through this area so that the lower section 183 (i.e., temperature controlled section) of the reactor body which is heated and/or cooled by the temperature control unit 13 is thermally isolated from the head 7 and the various components of the stirring assembly 21 carried by the head. For example, the area of reduced cross section ("neck down") could be at any location above the lower section 183 (i.e., temperature controlled section) of the reactor block body 11 which is heated and/or cooled. Alternatively, the area of reduced cross section could be at any location above the reaction zones of the reaction chambers to thermally isolate the reaction zones from those portions of the reactor block 11 and/or head 7 above the zones. Further, the area of reduced cross section could extend all the way to the upper face 171 of the block 11 and even into the head 7. For example, the head 7 depicted in Figs. 13, 27 and 28 contains an area of reduced cross section 211 (described in greater detail below) that facilitates in thermally isolating the reactor block body 11 and reaction zones from those portions of the system 1 above the area of reduced cross section. The use of an area (or areas) of reduced cross section to control the amount of heat transfer toward and away from each reaction zone allows the temperature within each reaction zone to be maintained substantially more uniform along the longitudinal (e.g., vertical) axis of the zone than would otherwise be the case without such an area or areas of reduced cross section. In other words, the axial temperature gradient in each such zone is reduced by using an area or areas of reduced cross section to thermally isolate the zone from other parts of the system. This allows the temperature in each reaction zone to be more closely controlled for more accurate results.

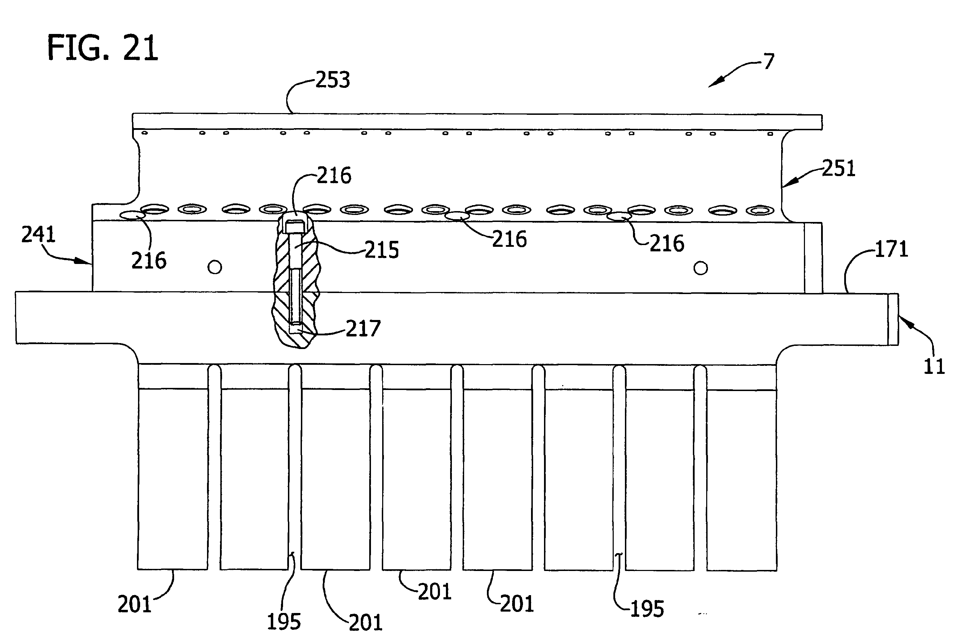

The head 7 and reactor block 11 are preferably held in assembly by suitable fasteners 215 (e.g., screws) threaded down through holes 216 in the head into tapped openings 217 in the upper face 171 of the reactor block (see Fig. 21).

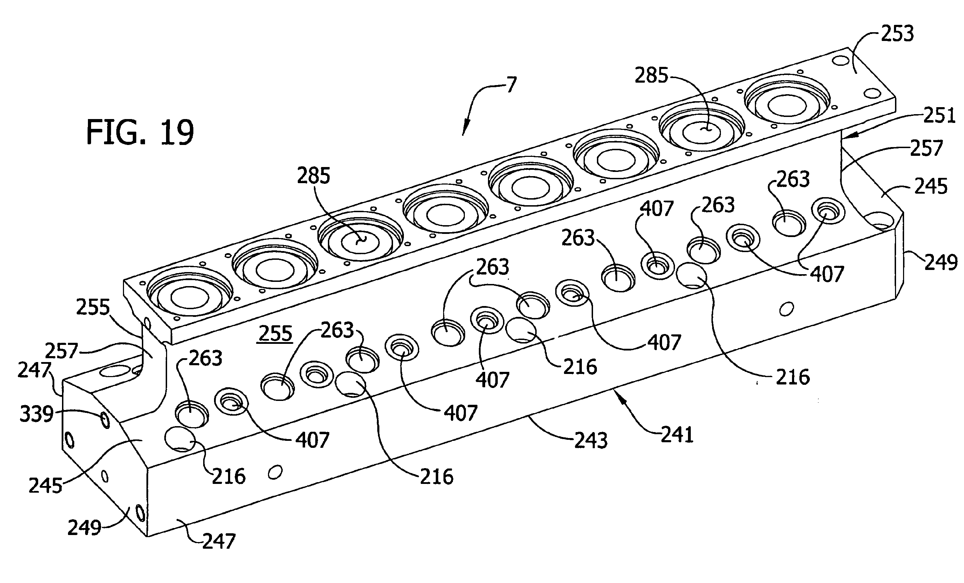

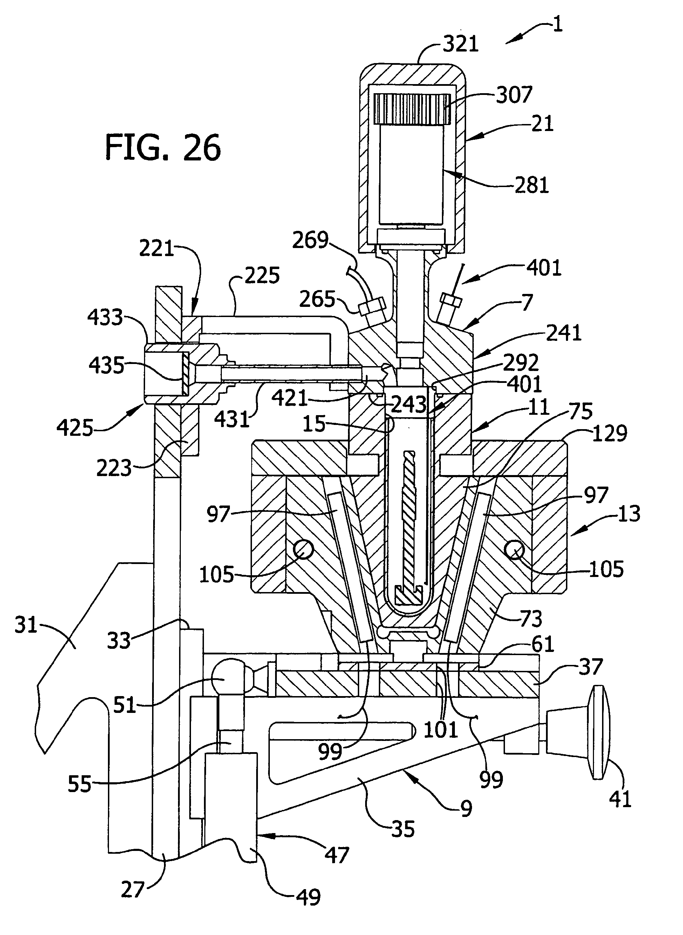

The head 7 comprises an elongate block of suitable material (e.g., aluminum) mounted in fixed position on the frame 3 at the front of the frame panel 27 by a bracket, generally designated 221, secured to the panel (see Figs. 1-3 and 5). The form of this bracket 221 can vary, but in one embodiment it comprises a mounting plate 223 fastened to the panel 27 of the frame, and a plurality of arms 225 extending forward from the mounting plate for holding the head 7 in a position spaced forward of the panel 27. The arms 225 are fastened to the head 7 by bolts (not shown) threaded in tapped bores 231 (see Fig. 18). Referring to Fig. 19, the head has a generally rectangular bottom section, generally designated 241, with a lower face 243, an upper face 245, opposite side faces 247, and end faces 249, and an upright center section, generally designated 251, extending up from the bottom section and having an upper face 253, opposite side faces 255, and opposite end faces 257. The head 7 has passaging therein adapted for fluid communication with the wells 15 when the reactor block 11 and head are in assembly. In one embodiment, this passaging comprises a plurality of first passages 261 in the head 7 for the delivery of reagents to the wells 15, and a plurality of second passages 263 for venting gases from the wells and delivering quenching fluids to the wells to terminate a reaction (see Figs. 18 and 19). In a preferred embodiment, two such first passages 261 are provided for enabling different reactants to be delivered to each well 15, for example, and one such second passage 263 is provided. The number of such first and second passages 261, 263 may vary without departing from the scope of this invention. Suitable fittings 265 may be threaded in these passages for the connection of appropriate fluid transfer lines 269 (see Fig. 26).

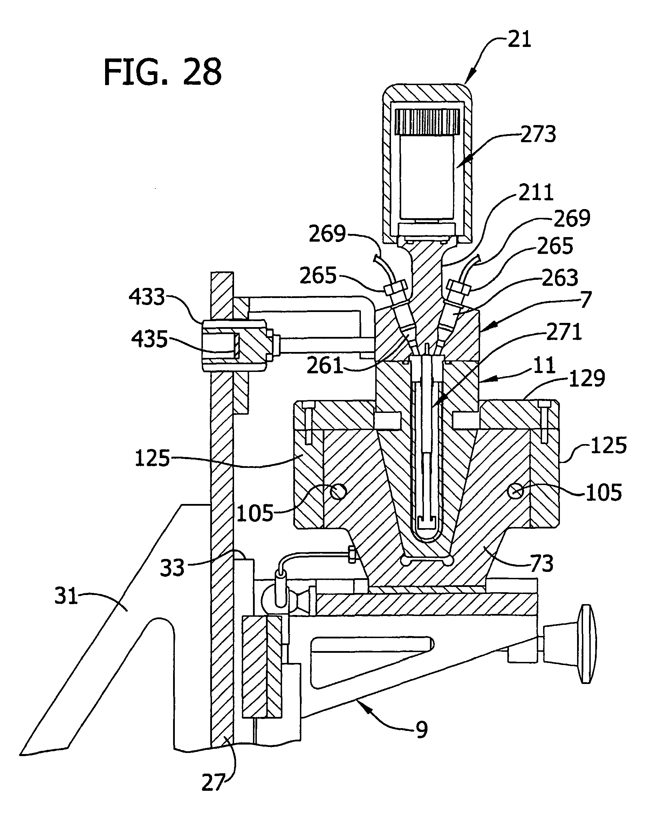

The stirring assembly 21 comprises a plurality of stirrers, each generally designated 271, positioned in the wells 15, and a drive mechanism, generally designated 273, sitting atop the head 7 for moving (e.g., rotating or reciprocating) the stirrers to mix the reaction mixtures in the wells 15. In one embodiment (see Fig. 22), the drive mechanism 273 comprises a plurality of magnetic feed-through devices, each generally designated 281, of the type described in U.S. Patent No. 6,306,658. The magnetic feed-through devices 281 are connected to respective stirrers 271 by a series of drive shafts 283 extending down through holes 285 in the head 7, and by couplings 291 which couple the drive shafts to the stirrers. The holes 285 in the head 7 are coaxial with the wells 15 in the reactor block 11 and are counterbored at their lower ends, as indicated at 292 (see Fig. 27). The passages 261 and 263 for the transfer of fluids to and from the wells 15 communicate with these counterbores 292, as shown in Fig. 28. Furthermore, when the head 7 and reactor block 11 are assembled, the aforementioned reaction chambers are formed. In the embodiment shown in Fig. 27, each reaction chamber includes the space defined by the walls of the well 15, the removable vial 191 (if used), and the counterbore 292 in the head 7. It will be understood, however, that the counterbore 292 could be eliminated in which case the reaction chamber would be defined entirely by the walls of the well 15 and the vial 191, if one is used.

As shown in Figs. 22 and 27, each stirrer 271 comprises a stirrer shaft 293 having a blade 295 at its lower end for mixing particularly viscous materials, but other types of stirrers may be used, including auger stirrers and those disclosed in pending U.S. Patent Application Serial No. 09/873,176, filed June 1, 2001, entitled "Parallel Semi-Continuous or Continuous Stirred Reactors," and pending U.S. Patent Application Serial No. 09/961,641, filed September 24, 2001, entitled "Apparatus and Method for Mixing Small Volumes of Reaction Materials." Each stirrer 271 may be of any suitable material which is chemically inert and resistant, although a non-metal material such as plastic or glass is preferred. The coupling 291 is preferably one which allows the stirrer 271 to be removed and replaced as needed.

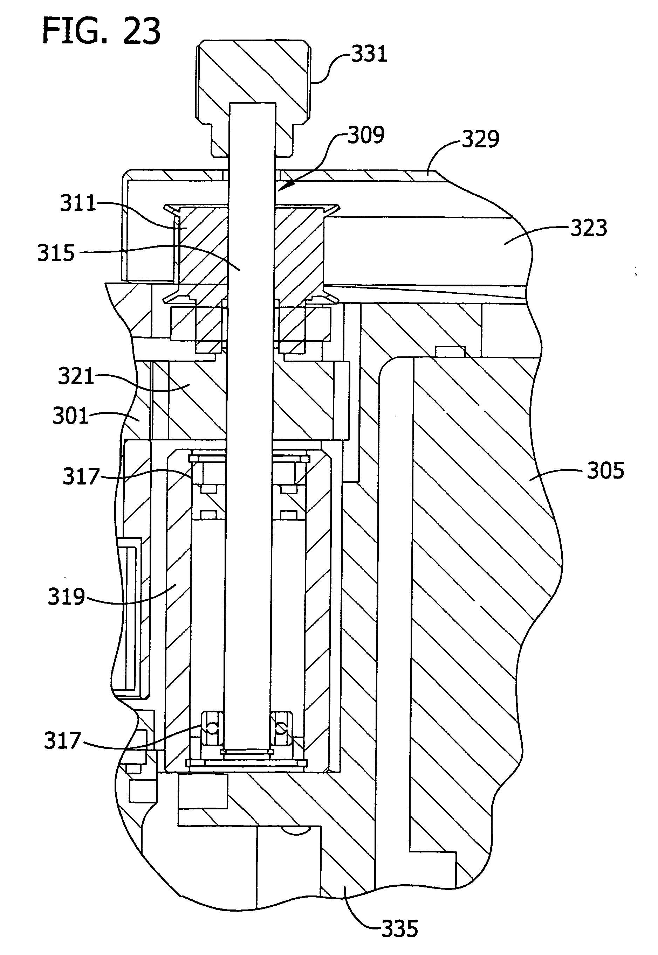

The drive mechanism 273 also includes a drive train 301 connecting the magnetic feed-through devices 281, a motor 305 for driving drive elements 307 of the drive train 301, and a belt and pulley connection (generally designated 309) between the motor and the drive train. In one embodiment (see Figs. 12 and 23), the drive train 301 and drive elements 307 comprise a gear train and gears, respectively, and the belt and pulley connection 309 comprises a pulley 311 mounted on the upper end of a vertical idler shaft 315 rotatably supported by bearings 317 in a cylindric housing 319. A drive gear 321 is keyed to the idler shaft 315 below the pulley 311 and meshes with the gear train 301. A belt 323 connects the pulley 311 and the drive shaft 325 of the motor 305 (see Fig. 12), so that rotation of the motor drive shaft serves to rotate the idler shaft 315 and the gears 307 of the gear train 301. The motor 305 and belt and pulley connection 309 are supported by a vertical column 335 at one end of the head 7, the lower end of the column being secured by at least one fastener 337, for example, threaded into a tapped bore 339 in the head 7 (see Figs. 12 and 19). It will be noted that the motor 305 and belt and pulley connection 309 are spaced a substantial distance from the reactor block 11. This arrangement, in combination with the configuration of the block 11 to reduce the amount of heat transfer between the upper and lower sections 181,183 of the block, decreases the extent of heat transfer between the well sections 201 of the reactor block and the drive mechanism 273.

The drive train 301 and drive elements 307 could take forms other than a gear train and gears, respectively. For example, the drive train could comprise a series of belt connections between the magnetic feed-through devices 281, or other types of mechanical connections forming a drive train powered by the motor 305.

The magnetic feed-through devices 281 and drive train 301 are enclosed by a cover 327, and the belt and pulley connection 309 is enclosed by a housing 329. The cover 327 and housing 329 are removably held in place by a cap nut 331 threaded on the upper end of the idler shaft 315 which extends up through openings in the cover and housing, as shown in Fig. 12.

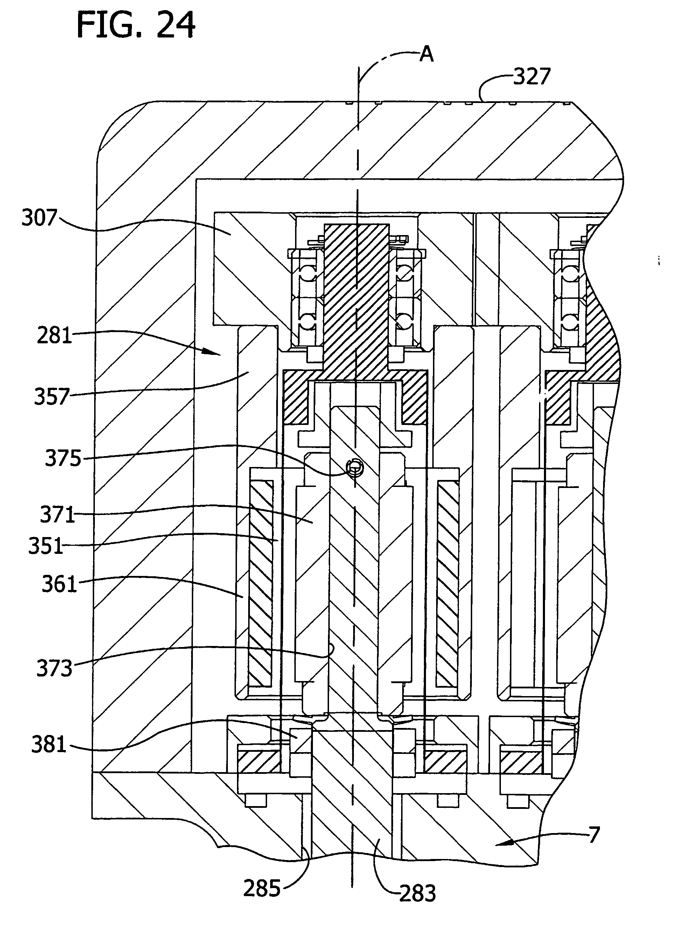

In the embodiment of Fig. 24, each magnetic feed-through device 281 comprises a cylindric pressure barrier 351 co-axially surrounded by a cylindric magnetic driver 361 connected at its upper end to a respective drive element (e.g., gear) 307 of the drive train 301 for rotation of the driver on an axis A coincident with the axis of the stirrer 271. The device 281 also includes a magnetic follower 371 inside the pressure barrier. The follower 371 is magnetically coupled to the driver 361 for rotation of the follower on axis A, as will be apparent to those skilled in this field. The follower 371 has an axial bore 373 therein for removably receiving the drive shaft 283 coupled to a respective stirrer 271. A pin 375 or other suitable means secures the drive shaft 283 to the follower 371 so that the two parts rotate in unison. Alternatively, the drive shaft 283 can be formed as an integral part of the follower 371. The drive shaft 283 extends down through a respective hole 285 in the head and into a respective well 15. The drive shaft 283 is rotatably supported by a pair of vertically spaced bearings (see Fig. 22), the upper bearing being designated 381 and the lower bearing designated 383 (see Fig. 22).

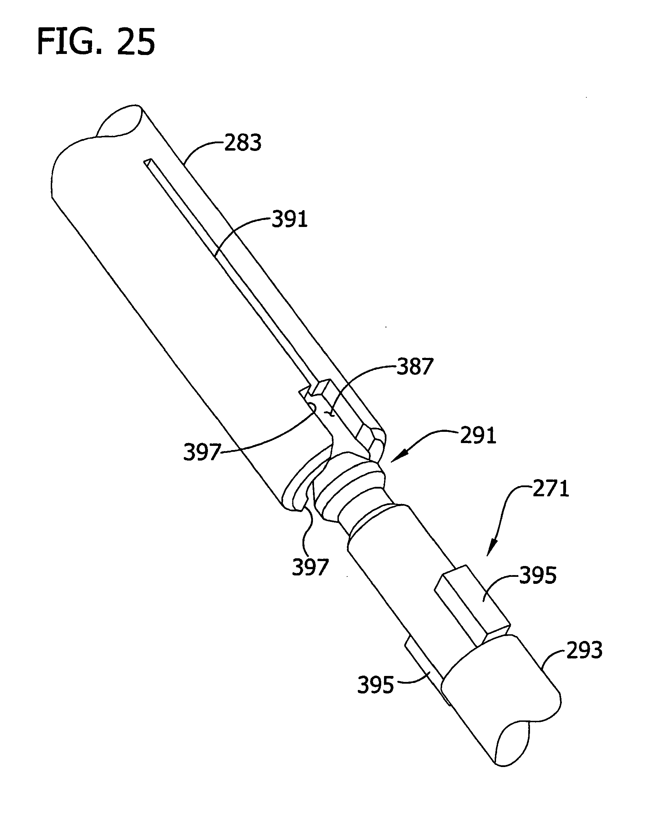

The coupling 291 between the stirrer shaft 293 and the drive shaft 283 can be of any design suitable for removably connecting the two shafts, one such design being shown in Fig. 25. In this embodiment, the lower end of the drive shaft 283 has an axial hollow or recess 387 formed therein for receiving the upper end of the stirrer shaft 293. Further, the lower end of the drive shaft 283 surrounding the recess 387 is resiliently expansible and contractible in a radial direction due to at least one slit, and preferably two or more slits 391 in the drive shaft extending up from its bottom edge. The upper end of the stirrer shaft 293 has an outside dimension (e.g., diameter) somewhat larger than the inside dimension (e.g., diameter) of the recess 387 when it is vacant so that insertion of the stirrer shaft into the recess causes the recess to expand resiliently and thereby exert a radial gripping force on the stirrer shaft tending to retain it in the recess. A pair of keys 395 project laterally outwardly from the stirrer shaft 293 into keyways 397 in the drive shaft 283 to prevent relative rotation between the two shafts. Other coupling designs can be used, such as those disclosed in U.S. Patent No. 6,306,658 and International Application No. PCT/US 99/18358, filed August 12, 1999 by Turner et al., entitled Parallel Reactor with Internal Sensing and Method of Using Same, published February 24, 2000 (International Publication No. WO 00/09255).

Referring again to Figs. 13, 27 and 28, the upright center section 251 of the head 7 extends up from the bottom section 241 of the head. This upright center section 251 includes the area of reduced cross section 211 that facilitates thermal isolation of the reactor block body 11 or reaction zones from those portions of the system 1 above the area of reduced cross section. In one embodiment, the area of reduced cross section 211 functions to further thermally isolate the drive mechanism 273 from the temperature controlled lower section 183 of the reactor block body 11 or, more generally, from the reaction zones.

In accordance with another aspect of this invention, at least one sensing device, generally designated 401, is attached to the head 7 for sensing one or more conditions (e.g., temperature, pH, viscosity, electrical conductivity, optical characteristics, etc.) relating to a chemical reaction taking place in a well 15. Preferably, one or more sensing devices, generally indicated 401, is provided for each well 15. In any event, the sensing device 401 is preferably mounted and configured so that when the head 7 and reactor block 11 are in assembly, the device actually resides in the reaction materials, thereby allowing in-situ monitoring and control of the reaction mixtures on a real-time basis.

In one embodiment (see Fig. 27), each sensing device 401 comprises an elongate sensor support 403 in the form of a flexible tube of metal or other suitable chemically resistant material extending down through an angled bore 407 in the head 7 and down into the well 15 when the head and reactor block 11 are in assembly. The angled bore 407 communicates at its lower end with a respective counterbore 292 in the lower face 243 of the head 7. The support 403 is preferably spaced radially outwardly from the longitudinal center axis of the well 15 away from the stirrer 271 to avoid interference with the stirrer during the stirring process. The elongate support 403 is preferably removably secured to the head 7 by a swaged fitting 411 or other connector so that it remains attached to the head when the reactor block 11 and head are separated. The sensing device 401 also includes a sensor 415 on the support 403, typically located toward the lower end of the support in a position which places the sensor in the reaction materials (or closely adjacent such materials) contained in the well 15 or the removable liner 191, if a liner is used. The sensor 415 can be attached to the support 403 in any suitable manner. For example, the sensor 415 may be a conventional thermocouple, for example, embedded in the wall of the support 403. More than one sensing device 415 may be used in a well 15 to sense different conditions.

For temperature sensing, the sensor 415 and sensor support 403 may be of conventional design. For example, a suitable assembly of such parts is commercially available from Omega, of Stamford CT. This assembly includes tubular sheath of stainless steel having a diameter in a range from about 0.254 mm (0.010 in.) to about 3.18 mm (0.125 in.) (and preferably about 1.52 mm (0.06 in.), a thermocouple sensor attached to the wall of the sheath adjacent its lower end, and a glass filled nylon connector (such as shown at 421 in Fig. 27) at the opposite end of the tubing for connecting the tubing to suitable electronic equipment.

As alluded to above, there are advantages to positioning the sensors 415 so that they reside in the reaction mixtures. First, since the sensors are in actual contact with the reaction materials, they are able to more accurately sense the temperatures of the reaction mixtures and to react more quickly to any changes in temperature, in essence providing real-time feedback of the temperatures of the reaction mixtures for more accurate monitoring and control of the reaction. Further, the physical presence of the sensing device 401 in the reaction fluids enhances the stirring process in that the device functions as a baffle to increase turbulence in the vessel to obtain a more homogenous distribution of reaction components. Moreover, the fact that the sensing devices 401 are affixed to the head 7 and not to the reactor block 11 simplifies the construction of the reactor block and facilitates the assembly and disassembly of the reactor block with respect to the head.

Referring to Fig. 26, the lower section 241 of the head 7 has additional passaging comprising a plurality of pressure relief passages 421 in pressure communication with respective wells 15 in the reactor block 11, each such passage extending, for example, from an exterior surface of the head (e.g., side face 247) to a respective counterbore 292 in the lower face 243 of the head. A pressure relief mechanism associated with the pressure relief passages 421 is provided to relieve the pressure in the wells 15 if the pressure rises to a level above a maximum pressure (e.g., 500 psig). This mechanism preferably comprises a plurality of pressure relief devices, each generally designated 425, one for each well 15. In one embodiment (see Fig. 26), each such device 425 comprises a burst assembly which includes a tube 431 connected at one end to a respective relief passage 421 and at its other end to an open-ended fitting 433 containing a rupture member 435 adapted to rupture at the stated maximum pressure. The rupture member 435 may comprise, for example, a rupture disc formed from Iconel Alloy 600 material, such as those discs available from Parr Instrument Company of Moline, Illinois, U.S.A. More particularly, the rupture member 435 may be selected to have a working pressure rating sufficient to withstand the typical operating conditions of the system 1, and a burst rating appropriate for rupture when the pressure within the system exceeds a designed working pressure. For safety reasons, it is preferred that the fittings 433 open away from the front of the apparatus 1 so that the relief devices 425 are operable to relieve pressure away from any person that might in front of the apparatus. Thus, in one embodiment, the fittings 433 extend through the bracket mounting plate 223 and are secured in openings in the panel 27 of the frame 3 (see Figs. 5, 6 and 26). In another embodiment, not shown, the pressure relief devices (e.g., rupture members) could be mounted in the pressure relief passages 421 in the head 7. In yet another embodiment (not shown), a plurality of pressure relief passages in the head, one passage for each well, may connect to a common line or manifold. The manifold, in turn, may communicate with a single pressure relief device which is operable to relieve pressure in all wells in the event the manifold pressure exceeds a predetermined pressure.

The operation of the system of this invention will now be described. Initially, the carriage 9 is in a lowered position in which the reactor block 11 is cradled in the temperature control unit 13 and separated from the head 7 (see Fig. 2). In this position, the reactor block 11 may conveniently be removed from the temperature control unit 13 by unlatching the two latches 135, lifting the reactor block 11 out of the cavity 91 defined by the unit, and placing the reactor block in a convenient location for loading of reaction materials either directly into the wells 15 of the reactor block or, more preferably, into vials or other removable liners 191 which are then placed in the wells. Alternatively, reaction preparation can be carried out while the reactor block 11 remains latched in place on the carriage 9. Prior to each run of reactions, a clean set of stirrers 271 is coupled to the drive mechanism 273 of the stirring assembly 21.

After the appropriate reaction materials are loaded, the reactor block 11 is replaced in the temperature control unit 13 and latched in position. The carriage 9 is released from its lowered position by pulling the pull-rods 41 out of their respective openings 43 in the frame panel 27, and then raising the carriage to a position in which it is immediately adjacent the head 7 so that the stirrers 271 and sensing devices 401 are received in respective wells 15 (see Fig. 1). The carriage 9 is locked in this position by releasing the pull-rods 41 to extend into another set of openings 43 in the frame panel 27. The threaded fasteners 215 are then tightened to raise the reactor block 11 (and the carriage 9 and the temperature control unit 13) a short distance into sealing engagement with the head 7, as permitted by the vertical slot-openings 43 in the frame panel (see Fig. 21). In this position, the O-rings 189 in recesses 187 in the upper face 171 of the reactor block seal against the lower face 243 of the head 7 to seal the wells 15 (see Figs. 15 and 22).

To initiate a typical run of reactions, a set of purge procedures is followed to purge all inlet lines and inlet passages 261, 263 in the head 7, particularly those that will contain reactants. These purge procedures may not be necessary if the previous run left the reactor in a ready or purged state. Generally, the purging is carried out so that all lines and reactor chambers contain a desired atmosphere or gas. In the delivery or inlet lines 261, typically, a reactant gas may be used, such as ethylene gas, to ensure that no dead volumes or other gases are in the delivery lines. After the purge procedure is complete, the wells 15 are charged with an appropriate gas or gases, which may be inert or reactant gases, to bring the wells to the desired pressure, which is typically greater than about 1.03 bar (15 psig), preferably from about 1.03 bar (15 psig) to about 241 bar (3500 psig), and more preferably in a range from about 3.45 bar (50 psig) to about 34.5 bar (500 psig), and even more preferably in a range from about 10.3 bar (150 psig) to about 34.5 bar (500 psig) delivered to pressurize the wells.

Using the system controller, the parameters of the run are then set. Such parameters include, for example, the reaction time, the duration and speed of the stirring (if stirring is required), and the temperature(s) at which the reactions are to be carried out. With respect to temperature, for example, a program may be entered in which: (a) the reaction mixtures are allowed to soak for a period of time at ambient temperature; (b) the heating elements 97 are energized to heat the mixtures to an intermediate temperature, as sensed by the sensing devices 401; (c) optionally, the reaction mixtures are allowed to soak for a period of time at said intermediate temperature; (d) optionally, the heating elements 97 are energized to increase the temperature of the mixtures to a final temperature; and (e) optionally, the reaction mixtures are allowed to soak for a period of time at said final temperature. The program to be carried out will vary, depending on the reactions to be run and the materials involved. Other programs may be followed, including those which involve cooling of the heat transfer plates 73 to reduce the temperature of one or more well sections 201 of the reactor block 11.

The run is then carried out under the control of a suitable control system, with the reaction mixtures being heated and/or cooled and/or stirred according to the desired program. During the run, the temperatures or other conditions of the reactions, as sensed by the sensing devices 401, are monitored, recorded and, optionally, controlled. Upon completion of the run, the reactions may be terminated by delivering a quenching gas (e.g., CO₂) to the chambers through passages 263 in the head 7. Prior to removing samples, appropriate venting procedures may be needed to ensure that there is no loss of product through the vent lines 263. Venting procedures may include slow venting (e.g., vent valve cycling) and/or inert gas purging (e.g., argon or nitrogen). After the appropriate venting procedures are complete, the fasteners 215 securing the reactor block 11 to the head 7 are removed, and the carriage 9 is lowered to separate the reactor block from the head to allow removal of the reaction samples and replacement of the removable vials 191 and stirrers 271. If desired, the reactor block 11 can be removed from the temperature control unit 13 to facilitate this process. The absence of connections between the reactor block 11 and any fluid transfer lines 261, 263 or instrumentation-related equipment makes this removal and later replacement much easier and more convenient.

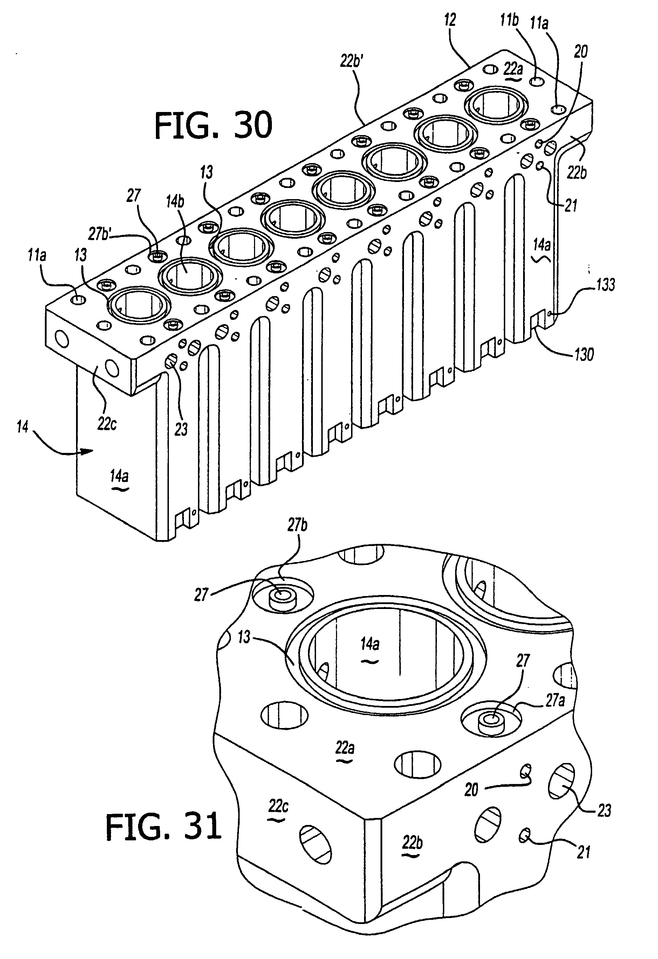

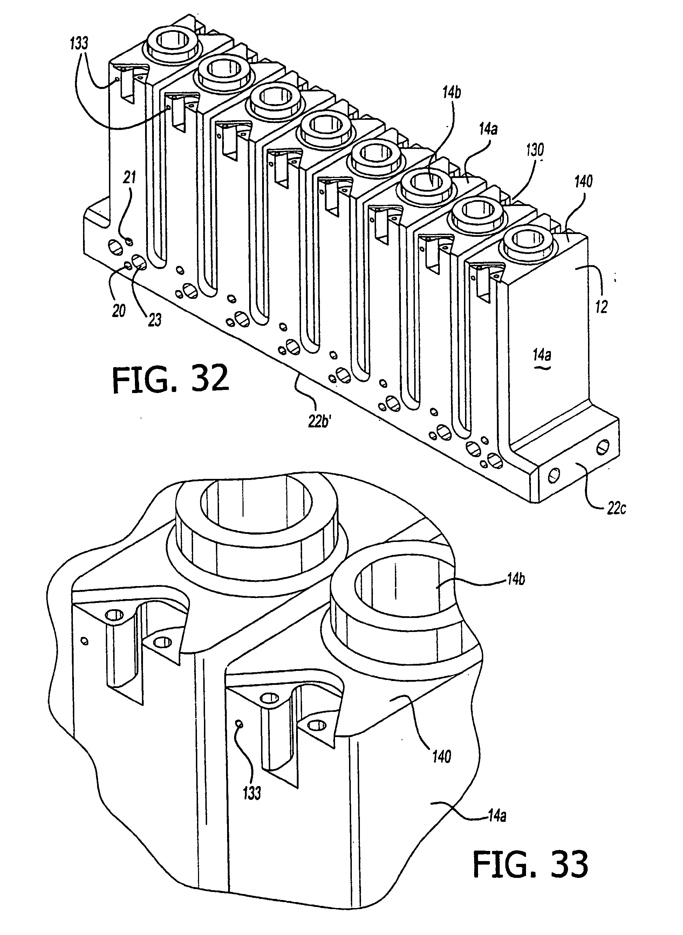

Figs. 29-33 show an embodiment of a reactor system described in detail in the aforementioned pending application Ser. No. 09/826,606, filed April 5, 2001, entitled "Parallel Reactor for Sampling and Conducting In Situ Flow-Through Reactions and Method of Using Same." This system, generally designated 10, which will be briefly described herein using the same reference numbers used in the aforementioned pending application, comprises a reactor block 12 defining a plurality of reaction chambers in the form of reactor wells 14 for receiving and retaining the reaction mixtures. As shown, the reactor block 12 defines eight reactor wells 14 formed in the reactor block 12 using known machining or metal working techniques. One of a skill in the art will appreciate that the reactor block 12 could be designed to include any desired number of reactor wells 14.

Each well 14 defines a rectangularly shaped body 14a that projects downwardly from the top surface 22a. Each body 14a is thermally separated, or isolated, from an adjacent body 14a by an air gap such that each reactor well 14 defines a separate reaction chamber that can be used to perform the same or different experiments in parallel. The air gap also thermally isolates adjacent well bodies 14a, which helps improve the efficiency of the parallel reactor system 10. Reference may be made to the aforementioned pending application for further details regarding the construction and operation of the system.

Thus, the embodiment shown in Figs. 29-33 and described above is similar to the embodiment first described above in that both embodiments use gaps in the reactor block between the wells to thermally isolate the wells.

It will be observed from the foregoing that a system of this invention has many advantages. For example, the reactor block 11 is readily removable from the temperature control unit 13 and carriage 9 for convenient cleaning, reaction preparation, etc. The fact that the various ports and passaging for fluid distribution and instrumentation (e.g., sensors) are located entirely in the head 7 and not in the reactor block 11 makes removal of the reactor block particularly convenient, since there is no need to disconnect and reconnect fluid lines and/or instrumentation. Further, the absence of such passaging and ports prevents leakage and avoids undesired void space in the reactor block 11. The temperature control unit 13 of this invention is also very efficient and accurate. The heat transfer plates 73 of the temperature control unit 13 are independently spring biased into thermal contact with respective well sections 201 of the reactor block, so that the temperature of each well section can be controlled independent of other well sections. Also, the gaps 195 in the reactor block 11 between the wells 15 and the reduced intermediate section 185 of the reactor block thermally isolate the well sections 201 from one another and from the head 7 and drive mechanism 273 of the stirring assembly, thus enabling multiple reactions to be carried out at substantially different temperatures and within closer temperature tolerances. Moreover, the sensing devices 401 provide for more efficient sensing and control of reaction conditions in the wells 15. In the event the pressure in a particular well or wells becomes excessively high during a reaction, the pressure relief mechanism operates to safely relieve the pressure in a direction away from the front of the apparatus.

When introducing elements of the present invention or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above constructions without departing from the scope of the invention, it is intended that all matter contained in the above description or shown in the accompanying drawings shall be interpreted as illustrative and not in a limiting sense.

## Claims

1. A combinatorial chemistry reactor system (1) for the parallel processing of reaction mixtures, comprising
a reactor block (11, 12) comprising a monolithic body of thermally conductive material having a plurality of wells (14, 15) therein for containing reaction mixtures,
a head (7) adapted for assembly with the reactor block to seal the wells for conducting non-ambient pressure reactions in the wells,
passaging (261, 263, 421) in the head adapted to communicate with the wells for the transport of fluids to or from the wells when the head is assembled with the reactor block, and
gaps (195) in the monolithic body of the reactor block extending between the wells to thermally isolate the wells from one another.

2. A system as set forth in claim 1 further comprising a stirring assembly (21) on the head comprising a plurality of stirrers (271) adapted to extend into the wells when the reactor block is assembled with the head, and a drive mechanism (273) for moving said stirrers, said reactor block having a temperature controlled section (183) containing at least portions of said wells, and an area of reduced cross section (185, 211) in at least one of the reactor block and the head at a location between the temperature controlled section of the reactor block and said drive mechanism to thermally isolate the temperature controlled section of the reactor block from said drive mechanism.

3. A system as set forth in claim 2 wherein said area of reduced cross section (185) is in said reactor block at a location between opposite ends of at least one of said wells.

4. A system as set forth in claim 2 wherein said area of reduced cross section (211) is in the head.

5. A system as set forth in claim 1 wherein said head is adapted for assembly with the reactor block to define reaction chambers extending down into the reactor block at locations corresponding to said wells, said reaction chambers having reaction zones in which chemical reactions are conducted, and an area of reduced cross section (185, 211) in at least one of the reactor blocks and the head at a location above at least one reaction zone to thermally isolate the reaction zone from portions of the system above said area of reduced cross section.

6. A system as set forth in claim 5 wherein said area of reduced cross section (185) is in the reactor block.

7. A system as set forth in claim 5 wherein said area of reduced cross section (211) is in the head.

8. A system as set forth in claim 5 wherein the reactor block is recessed (185) to reduce the thickness of the block at locations between opposite ends of each well.

9. A system as set forth in claim 8 wherein the reactor block has an upper section (181), a lower section (183), and a relatively narrow intermediate section (185) connecting the upper and lower sections for reducing the transfer of heat therebetween, the wells extending down through the upper and intermediate sections into the lower sections, and the gaps between the wells dividing the lower section into a plurality of individual well sections (201) thermally isolated from one another by the gaps.

10. A system as set forth in claim 1 wherein said head is adapted for assembly with the reactor block to define reaction chambers, said head having a section (241) adjacent the reactor block and a remote section (251) away from the reactor block, said reactor block having a temperature controlled section (183) and an area of reduced cross section (185, 211) in at least one of the reactor block and the head at a location between the temperature controlled section of the reactor block and the remote section of the head to thermally isolate the temperature controlled section from the remote section of the head.

11. A system as set forth in claim 10 wherein said area of reduced cross section (185) is in the reactor block.

12. A system as set forth in claim 10 wherein said area of reduced cross section (211) is in the head.

13. A system as set forth in claim 1 wherein the reactor block has an upper section (181), a lower section (183), and a relatively narrow intermediate section (185) connecting the upper and lower sections for reducing the transfer of heat therebetween, the wells extending down through the upper and intermediate sections into the lower sections, and the gaps between the wells dividing the lower section into a plurality of individual well sections (201) thermally isolated from one another by the gaps.

14. A system as set forth in claim 1 wherein said monolithic body is essentially devoid of fluid transport passaging.

15. A system as set forth in claim 14 wherein said monolithic body is essentially devoid of passaging for instrumentation.

16. A system as set forth in claim 1 further comprising a temperature control unit (13) defining a cavity (91) for receiving a lower section (183) of the reactor block therein, said temperature control unit being operable to control the temperatures of the reaction mixtures in respective wells independently of one another.

17. A system as set forth in claim 16 wherein said temperature control unit comprises a plurality of heat transfer plates (73) defining said cavity.

18. A system as set forth in claim 17 further comprising a mechanism (135) operable to press the reactor block against said heat transfer plates when the reactor block is in said cavity.

19. A system as set forth in claim 17 further comprising layers (75) of thermal insulation between said heat transfer plates.

20. A system as set forth in claim 17 wherein said heat transfer plates are spring (115) biased into contact with said reactor block body.

21. A system as set forth in claim 16 wherein said temperature control unit is configured for cradling said reactor block therein.

22. A system as set forth in claim 16 wherein the reactor block and temperature control unit have cooperating tapered surfaces (175, 87) adapted for face to face contact with one another.

23. A system as set forth in claim 22 further comprising a mechanism (135) operable to press the tapered surfaces of the reactor block against the tapered surfaces of the temperature control unit when the reactor block is in said cavity.

24. A system as set forth in claim 13 wherein said reactor block is essentially devoid of fluid transport passaging and passaging for instrumentation, said upper section having an upper face (171),
each well extending from said upper face down through the upper and intermediate sections into the lower section,
said system further comprising
recesses (185) in the monolithic body to reduce the thickness of the body at locations between opposite ends of each well to reduce the transfer of heat toward the upper face of the block.

## Patentansprüche

1. Reaktorsystem (1) für kombinatorische Chemie zum parallelen Verarbeiten von Reaktionsgemischen, das folgendes umfasst:
einen Reaktorblock (11, 12) der einen monolithischen Körper aus thermisch leitfähigem Material mit einer Vielzahl von Vertiefungen (14, 15) darin zum Aufnehmen der Reaktionsgemische umfasst;
einen Kopf (7), der ausgelegt ist, dass er mit dem Reaktorblock so zusammengefügt werden kann, dass die Vertiefungen abgedichtet werden, um in den Vertiefungen Reaktionen bei Nichtumgebungsdruck durchzuführen,
Durchführungen (261, 263, 421) in dem Kopf, die so ausgelegt sind, dass sie mit den Vertiefungen zum Transport von Fluiden zu und von den Vertiefungen verbunden sind, wenn der Kopf und der Reaktorblock zusammengefügt ist, und
Lücken (195) in dem monolithischen Körper des Reaktorblocks, die sich zwischen den Vertiefungen erstrecken, um die Vertiefungen voneinander thermisch zu isolieren.

2. System gemäß des Anspruches 1, das weiterhin eine Rühranordnung (21) auf dem Kopf umfasst, das folgendes einschließt: eine Vielzahl von Rührern (271), die so ausgelegt sind, dass sie sich in die Vertiefungen erstrecken, wenn der Reaktorblock und der Kopf zusammengefügt ist, und ein Antriebsmechanismus (273) um die Rührer zu bewegen, wobei der Reaktorblock einen temperaturregulierten Bereich (183) aufweist, der zumindest Teile der Vertiefungen enthält, und einen Bereich mit reduziertem Querschnitt (185, 211) in zumindest entweder dem Reaktorblock oder dem Kopf an einem Ort zwischen dem temperaturregulierten Bereich des Reaktorblocks und dem Antriebsmechanismus, um den temperaturgeregelten Bereich des Reaktorblocks von dem Antriebsmechanismus zu isolieren.

3. System gemäß Anspruch 2, worin der Bereich mit reduziertem Querschnitt (185) sich in dem Reaktorblock an einem Ort zwischen gegenüberliegenden Enden von mindestens einer der Vertiefungen befindet.

4. System gemäß Anspruch 2, worin sich der Bereich mit reduziertem Querschnitt (211) in dem Kopf befindet.

5. System nach Anspruch 1, worin der Kopf zum Zusammenbau mit dem Reaktorblock ausgelegt ist, um Reaktionskammern zu definieren, die sich nach unten in den Reaktorblock an Orten entsprechend den Vertiefungen erstrecken, wobei die Reaktionskammern folgendes aufweisen: Reaktionszonen, in denen chemische Reaktionen durchgeführt werden, und einen Bereich mit reduziertem Querschnitt (185, 211) in zumindest entweder dem Reaktorblock oder dem Kopf an Orten oberhalb mindestens einer Reaktionszone, um die Reaktionszone thermisch von Bereichen des Systems oberhalb des Bereichs mit reduziertem Querschnitt zu isolieren.

6. System nach Anspruch 5, worin sich der Bereich mit reduziertem Querschnitt (185) in dem Reaktorblock befindet.

7. System nach Anspruch 5, worin sich der Bereich mit reduziertem Querschnitt (211) in dem Kopf befindet.

8. System nach Anspruch 5, worin der Reaktorblock Aussparungen (185) umfasst, um die Dicke des Blocks an Orten zwischen gegenüberliegenden Enden jeder Vertiefung zu reduzieren.

9. System nach Anspruch 8, worin der Reaktorblock einen oberen Bereich (181), einen unteren Bereich (183), und einen relativ engen Zwischenbereich (185), der den oberen und den unteren Bereich verbindet, um die Wärmeübertragung dazwischen zu reduzieren, aufweist, wobei sich die Vertiefungen nach unten durch den oberen Bereich und den Zwischenbereich in den unteren Bereich erstreckt, und wobei die Lücken zwischen den Vertiefungen den unteren Bereich in eine Vielzahl von individuellen Vertiefungsbereichen (201) unterteilt, die thermisch voneinander durch die Lücken isoliert sind.

10. System nach Anspruch 1, worin der Kopf zum Zusammenbau mit dem Reaktorblock ausgelegt ist, um Reaktionskammern zu definieren, wobei der Kopf einen Bereich (241) benachbart zum Reaktorblock und einem entfernten Bereich (251) abseits von dem Reaktorblock aufweist, wobei der Reaktorblock einen temperaturgesteuerten Bereich (183) und einen Bereich mit reduziertem Querschnitt (185, 211) in zumindest entweder dem Reaktorblock oder dem Kopf an einem Ort zwischen dem temperaturkontrollierten Bereich des Reaktorblocks und dem entfernten Bereich des Kopfes aufweist, und wobei der entfernte Bereich des Kopfes den temperaturkontrollierten Bereich von dem entfernten Bereich des Kopfes thermisch isoliert.

11. System nach Anspruch 10, worin sich der Bereich mit reduziertem Querschnitt (185) in dem Reaktorblock befindet.

12. System nach Anspruch 10, worin sich der Bereich mit reduziertem Querschnitt (211) in dem Kopf befindet.

13. System nach Anspruch 1, worin der Reaktorblock einen oberen Bereich (181), einen unteren Bereich (183) und einen relativ engen Zwischenbereich (185), der den oberen und den unteren Bereich verbindet, um die Wärmeübertragung dazwischen zu reduzieren, aufweist, wobei sich die Vertiefungen nach unten durch den oberen Bereich und den Zwischenbereich in den unteren Bereich erstreckt, und wobei die Lücken zwischen den Vertiefungen den unteren Bereich in eine Vielzahl von individuellen Vertiefungsbereichen (201) unterteilt, die thermisch voneinander durch die Lücken isoliert sind.

14. System nach Anspruch 1, worin der monolithische Körper im Wesentlichen frei von Fluidtransportdurchgängen ist.

15. System nach Anspruch 14, worin der monolithische Körper im Wesentlichen frei von Durchgängen zur Instrumentierung ist.

16. System nach Anspruch 1, das weiterhin eine Temperatursteuereinheit (13) umfasst, die einen Hohlraum (91) zur Aufnahme eines unteren Bereichs (183) des Reaktorblockes darin definiert, wobei die Temperatursteuereinheit betrieben werden kann, die Temperaturen von Reaktionsgemischen in entsprechenden Vertiefungen unabhängig voneinander zu kontrollieren.

17. System nach Anspruch 16, worin die Temperatursteuereinheit eine Vielzahl von Wärmeübertragungsplatten (73) umfasst, die den Hohlraum definieren.

18. System nach Anspruch 17, das weiterhin einen Mechanismus (135) umfasst, der so betrieben werden kann, dass er den Reaktorblock gegen die Wärmeübertragungsplatten presst, wenn sich der Reaktorblock in dem Hohlraum befindet.

19. System nach Anspruch 17, das weiterhin Schichten (75) aus thermischer Isolierung zwischen den Wärmeübertragungsplatten umfasst.

20. System nach Anspruch 17, worin die Wärmeübertragungsplatten Federn (115) sind, die in Kontakt mit dem Reaktorblockkörper vorgespannt sind.

21. System nach Anspruch 16, worin die Temperatursteuereinheit konfiguriert ist, den Reaktorblock darin einzurüsten.

22. System nach Anspruch 16, worin der Reaktorblock und die Temperatursteuereinheit zusammenwirkende konisch zulaufende Oberflächen (175, 87) aufweisen, die so ausgelegt sind, dass sie sich Fläche an Fläche berühren.

23. System nach Anspruch 22, das weiterhin einen Mechanismus (135) umfasst, der so betrieben werden kann, dass er die konischen Flächen des Reaktorblocks gegen die konischen Flächen der Temperatursteuereinheit presst, wenn sich der Reaktorblock in dem Hohlraum befindet.

24. System nach Anspruch 13, worin der Reaktorblock im Wesentlichen, frei von Fluidtransportdurchgängen und Durchgängen zur Instrumentierung ist, wobei der obere Bereich eine Oberseite (171) aufweist,
wobei sich jede Vertiefung von der Oberseite nach unten durch den oberen Bereich und den Zwischenbereich in den unteren Bereich erstreckt,
wobei das System weiterhin Aussparungen (185) in dem monolithischen Körper umfasst, um die Dicke des Körpers an Orten zwischen gegenüberliegenden Enden jeder Vertiefung zu reduzieren, um die Wärmeübertragung zu der oberen Seite des Blocks zu reduzieren.

## Revendications

1. Système de réacteur (1) pour chimie combinatoire pour le traitement en parallèle de mélanges réactionnels, comportant
un bloc (11, 12) de réacteur comprenant un corps monolithique en matière thermiquement conductrice renfermant de multiples cavités (14, 15) destinées à contenir des mélanges réactionnels,
une tête (7) conçue pour être assemblée avec le bloc de réacteur afin d'obturer de façon étanche les cavités pour exécuter des réactions sous pression non ambiante dans les cavités,
un passage (261, 263, 421) dans la tête, conçu pour communiquer avec les cavités pour le transport de fluides vers les cavités et à partir de celles-ci lorsque la tête est assemblée avec le bloc de réacteur, et
des intervalles (195) dans le corps monolithique du bloc de réacteur s'étendant entre les cavités pour isoler thermiquement les cavités les unes des autres.

2. Système selon la revendication 1, comportant en outre un ensemble d'agitation (21) sur la tête, comportant plusieurs agitateurs (271) conçus pour pénétrer dans les cavités lorsque le bloc de réacteur est assemblé avec la tête, et un mécanisme d'entraînement (273) destiné à déplacer lesdits agitateurs, ledit bloc de réacteur ayant une section (183) à température régulée contenant au moins des parties desdites cavités, et une zone de section transversale réduite (185, 211) dans au moins l'un du bloc de réacteur et de la tête en un emplacement situé entre la section à température régulée du bloc de réacteur et ledit mécanisme d'entraînement pour isoler thermiquement dudit mécanisme d'entraînement la section à température régulée du bloc de réacteur.

3. Système selon la revendication 2, dans lequel ladite zone de section transversale réduite (185) se trouve dans ledit bloc de réacteur en un emplacement situé entre des extrémités opposées d'au moins l'une desdites cavités.

4. Système selon la revendication 2, dans lequel ladite zone de section transversale réduite (211) est située dans la tête.

5. Système selon la revendication 1, dans lequel ladite tête est conçue pour être assemblée avec le bloc de réacteur afin de définir des chambres de réaction descendant dans le bloc de réacteur en des emplacements correspondant auxdites cavités, lesdites chambres de réaction ayant des zones de réaction dans lesquelles des réactions chimiques sont conduites, et une zone de section transversale réduite (185, 211) dans au moins l'un des blocs de réacteur et la tête en un emplacement situé au-dessus d'au moins une zone de réaction pour isoler thermiquement la zone de réaction de parties du système situées au-dessus de ladite zone de section transversale réduite.

6. Système selon la revendication 5, dans lequel ladite zone de section transversale réduite (185) se trouve dans le bloc de réacteur.

7. Système selon la revendication 5, dans lequel ladite zone de section transversale réduite (211) se trouve dans la tête.

8. Système selon la revendication 5, dans lequel le bloc de réacteur est évidé (185) pour réduire l'épaisseur du bloc en des emplacements situés entre des extrémités opposées de chaque cavité.

9. Système selon la revendication 8, dans lequel le bloc de réacteur comporte une section supérieure (181), une section inférieure (183) et une section intermédiaire relativement étroite (185) reliant les sections supérieure et inférieure pour réduire la transmission de chaleur entre elles, les cavités s'étendant vers le bas à travers les sections supérieure et intermédiaire jusque dans les sections inférieures, et les intervalles entre les cavités divisant la section inférieure en de multiples sections de cavités individuelles (201) isolées thermiquement les unes des autres par les intervalles.

10. Système selon la revendication 1, dans lequel ladite tête est conçue pour être assemblée avec le bloc de réacteur afin de définir des chambres de réaction, ladite tête ayant une section (241) adjacente au bloc de réacteur et une section distante (251) éloignée du bloc de réacteur, ledit bloc de réacteur ayant une section (183) à température régulée et une zone de section transversale réduite (185, 211) dans au moins l'un du bloc de réacteur et de la tête en un emplacement situé entre la section à température régulée du bloc de réacteur et la section distante de la tête pour isoler thermiquement la section à température régulée de la section distante de la tête.

11. Système selon la revendication 10, dans lequel ladite zone de section transversale réduite (185) se trouve dans le bloc de réacteur.

12. Système selon la revendication 10, dans lequel ladite zone de section transversale réduite (211) se trouve dans la tête.

13. Système selon la revendication 1, dans lequel le bloc de réacteur comporte une section supérieure (181), une section inférieure (183) et une section intermédiaire (185) relativement étroite reliant les sections supérieure et inférieure pour réduire la transmission de chaleur entre elles, les cavités s'étendant vers le bas à travers les sections supérieure et intermédiaire jusque dans les sections inférieures, et les intervalles entre les cavités divisant la section inférieure en plusieurs sections de cavités individuelles (201) isolées thermiquement les unes des autres par les intervalles.

14. Système selon la revendication 1, dans lequel ledit corps monolithique est essentiellement dépourvu de passages de transport de fluide.

15. Système selon la revendication 14, dans lequel ledit corps monolithique est essentiellement dépourvu de passages pour des instruments.

16. Système selon la revendication 1, comportant en outre une unité (13) de commande de température définissant un logement (91) destiné à recevoir une section inférieure (183) du bloc de réacteur, ladite unité de commande de température pouvant être mise en oeuvre pour commander les températures des mélanges réactionnels dans des cavités respectives indépendamment les unes des autres.

17. Système selon la revendication 16, dans lequel ladite unité de commande de température comporte plusieurs plaques (73) de transmission de chaleur définissant ledit logement.

18. Système selon la revendication 17, comportant en outre un mécanisme (135) pouvant être mis en oeuvre pour appliquer sous pression le bloc de réacteur contre lesdites plaques de transmission de la chaleur lorsque le bloc de réacteur est dans ledit logement.

19. Système selon la revendication 17, comportant en outre des couches (75) d'isolant thermique entre lesdites plaques de transmission de la chaleur.

20. Système selon la revendication 17, dans lequel lesdites plaques de transmission de la chaleur sont rappelées par ressort (115) en contact avec ledit corps du bloc de réacteur.

21. Système selon la revendication 16, dans lequel ladite unité de commande de température est configurée pour loger en elle ledit bloc de réacteur.

22. Système selon la revendication 16, dans lequel le bloc de réacteur et l'unité de commande de température présentent des surfaces coniques coopérantes (175, 87) conçues pour un contact face à face l'une avec l'autre.

23. Système selon la revendication 22, comportant en outre un mécanisme (135) pouvant être mis en oeuvre pour appliquer sous pression les surfaces coniques du bloc de réacteur contre les surfaces coniques de l'unité de commande de température lorsque le bloc de réacteur est dans ladite cavité.

24. Système selon la revendication 13, dans lequel ledit bloc de réacteur est essentiellement dépourvu de passages de transport de fluide et de passage pour des instruments, ladite section supérieure ayant une face supérieure (171),
chaque cavité s'étendant depuis ladite face supérieure vers le bas à travers les sections supérieure et intermédiaire jusque dans la section inférieure,
ledit système comportant en outre
des évidements (185) dans le corps monolithique pour réduire l'épaisseur du corps en des emplacements situés entre des extrémités opposées de chaque cavité afin de réduire la transmission de chaleur vers la face supérieure du bloc.
